(19)

Europäisches Patentamt
European Patent Office
Office européen des brevets

(11) **EP 2 570 034 B1**

(12) **EUROPEAN PATENT SPECIFICATION**

(45) Date of publication and mention
of the grant of the patent:
**13.01.2016 Bulletin 2016/02**

(51) Int Cl.:
**A23K 1/16** *(0000.00)*  **A23K 1/18** *(0000.00)*

(21) Application number: **11181523.9**

(22) Date of filing: **15.09.2011**

(54) **Feed for aquacultural animals**

Futter für Aquakulturtiere

Alimentation pour animaux aquacoles

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.03.2013 Bulletin 2013/12**

(73) Proprietor: **Landwirtschaftliches Zentrum für
Rinderhaltung,
Grünlandwirtschaft, Milchwirtschaft, Wild und
Fischerei Baden-Württemberg
88326 Aulendorf (DE)**

(72) Inventors:
• **Brinker, Alexander
88214 Ravensburg (DE)**

• **Unger, Julia
78462 Konstanz (DE)**

(74) Representative: **Elbel, Michaela
PATERIS
Patentanwälte PartmbB
Altheimer Eck 13
80331 München (DE)**

(56) References cited:
**WO-A1-2005/110113      FR-A1- 2 584 270
US-A1- 2006 127 453**

• **UNGER JULIA ET AL: "Floating feces: A new
approach for efficient removal of solids in
aquacultural management", August 2013
(2013-08), AQUACULTURE, VOL. 404, PAGE(S)
85-94 ISSN: 0044-8486(print)**

EP 2 570 034 B1

**Description**

Field of the invention

The present invention relates to a feed for an aquacultural animal comprising a density reducing material. The invention also relates to uses of a density reducing material as an additive for a feed for an aquacultural animal and for manufacturing a feed for an aquacultural additive.

Background of the invention

Sustainable and efficient water management, environmental degradation, disease transmission and non-native introductions are some of the factors that put force on aquacultural operation towards land-based systems. Besides regulations regarding the quality of aquacultures strict requirements for effluences from aquacultures have been implicated in recent years. Therefore, advanced cleaning systems are needed for effectively treating effluences from aquacultures before they can be discharged into the surrounding environment.

Traditional aquacultural technology requires large amounts of water such that in many geographical areas production capacities are limited by water supply. Therefore, so-called recirculating aquaculture systems (RAS) were developed, which show reduced water consumption compared to traditional culture systems. However, in order to maintain good water quality advanced cleaning systems with high technical standards have to be employed to clean the waste water before reintroducing it into the system. Thus, for traditional aquacultural technology (flow-through systems) as well as for RAS, easy-to-handle and cost-effected cleaning devices are needed for clearing effluent water.

Document FR 2 584 270 describes a feed for fish containing silicates, silicone or silica to obtain floating faeces.

Summary of the invention

In a first aspect, the invention relates to a feed for an aquacultural animal comprising a density reducing material and an indigestible polysaccharide, wherein the density reducing material is cork granulate and is incorporated into the animal's faeces during digestion, such that the faeces rise towards a water surface wherein the feed comprises the density reducing material in a concentration of about 0,25 to about 5 %.

In a second aspect the present invention relates to the use of a density reducing material as an additive for a feed for an aquacultural animal.

In a third aspect, the present invention relates to the use of a density reducing material for manufacturing a feed for an aquacultural animal.

Brief description of the drawings

Figure 1    shows final weight ($\pm$ S.D) of the fish. Bars with an asterisk are significant smaller than the maximum (p<0.05).

Figure 2    shows Feed Conversion Ratio (FCR) and Specific Growth Rate (SGR) ($\pm$ S.D). Bars with an asterisk are significant larger than the minimum (p<0.05).

Figure 3    shows mean densities of intestinal faeces and faeces moistened in water for 1 h derived from 2 A with different commercial feeds.

Figure 4    shows the calculated removal efficiencies for three different over flow rates (OFR) ($V_0 = 0,057 cms^{-1}$, $V_0 = 0,130 cms^{-1}$, $V_0 = 0,394 cms^{-1}$) of faeces derived from fish fed with different commercial feeds.

Figure 5    shows the formation of gas upon incubation of a fermentation enhancing additive with fish faeces for 48 h in 15 ml culture tubes (A, B).

Figure 6    shows the mean final weight of fish fed with feeds comprising different density reducing materials.

Figure 7    shows the Feed Conversion Ratio of fish fed with feeds comprising different density reducing materials.

Figure 8    shows the Specific Growth Rate of fish fed with feeds comprising different density reducing materials.

Figure 9 shows the frequency of liver lesions observed in fish fed with feeds comprising different density reducing materials.

Figure 10 shows the frequency of intestinal inflammation observed in fish fed with feeds comprising different density reducing materials (*p<0,05).

Figure 11 shows mean densities of intestinal faeces and faeces moistened in water for 1 h derived from fish fed with feeds comprising different density reducing materials (***p<0,0001, **p<0,01, *p<0,03).

Figure 12 shows fish faeces that were derived from fish fed with feed comprising perlite microspheres (A) and fish faeces that were derived from fish fed with feed comprising cork granulate (B), both swimming at the water surface.

Detailed description of the invention

In a first aspect, the present invention relates to to a feed for an aquacultural animal comprising a density reducing material and an indigestible polysaccharide, wherein the density reducing material is cork granulate and is incorporated into the animal's faeces during digestion, such that the faeces rise towards a water surface, wherein the feed comprises the density reducing material in a concentration of about 0,25 to about 5 %.

Especially when culturing aquatic animals in land-based aquaculture systems, the animals have to be provided with clean water to ensure their health and optimal growth. For these reasons, clean water is constantly added to and effluent water removed from aquacultures. The effluent water is then either released into the environment or reintroduced into the aquaculture such as to establish a recirculating system. In both cases, however, the effluent water has to be cleared from residues, in particular from suspended solids. Especially for recirculating aquaculture systems an efficient removal of suspended solids is essential, since they deposit on the surface of the cultured animals strongly impairing their vitality. Suspended solids are difficult to remove, because in dependence on their physical properties a more or less large fraction is too small to be collected by conventional filter or settling systems. Moreover the solids are distributed throughout the entire depth of the water only slowly settling at the bottom. Therefore, large amounts of water have to be cleared by high-tech filtration systems to efficiently remove suspended solids before releasing the effluent water to the environment or reintroducing it into recirculating aquaculture systems.

Most suspended solids, in particular in closed artificial aquacultural systems, are derived from the faeces of the cultured animals. After being dispensed into the water by the animals, the faeces sink down to the ground. In contrast, the feed of the invention, when fed to aquacultural animals, leads to the production of faeces of particularly low density, such that, instead of slowly settling, the faeces rise towards the water surface. From there they can be easily removed even in time to avoid degradation. Surprisingly, this effect was obtained by feeding the animals with diets comprising a density reducing material. During the process of digestion, the density reducing material becomes incorporated into the animal's faeces such that the faeces themselves have a reduced density reaching or even dropping below the density of water. Because of that they rise towards the water surface upon excretion and accumulate within a depth of about 10 to 15 cm below or directly at the water surface. From there the faeces can be removed by conventional filter systems e.g. using bead filters or screen filters. Thus, the feed of the invention also helps to alleviate the amount of suspended solids in the water, thereby reducreducing the cost-intensive use of filter systems or increasing fish producing capacity without raising waste loads and contributes to improve aquaculture with regard to ecological as well as economical aspects.

The term "density reducing material" refers to any material that when admixed with another substance reduces the density of the product compared to the density of the substance, wherein the density reducing material persists within the product, e.g. the feed for an aquacultural animal. Such density reducing materials are for example lightweight fillers that may be made from volcanic material, glass, synthetic compounds or natural composites. They usually contain high amounts of small air inclusions that significantly reduce weight and density of the material.

In a preferred embodiment, the density reducing material is indigestible, such that it is not degraded during digestion and is completely incorporated into the animals' faeces. As a result, the molecular structure of the density reducing material and its physical as well as chemical properties are maintained when included in the faeces. In addition, since the density reducing material is not digested, the amount that has to be applied to obtain an optimal buoyant effect of the faeces can be exactly calculated and thus minimized, without any loss of material during the process of digestion.

In a preferred embodiment the density reducing material has a density of less than about 1000 kg/m$^3$, preferably of less than about 800 kg/m$^3$, more preferred of less than about 600 kg/m$^3$ and most preferred of less than about 250 kg/m$^3$. For causing an efficient buoyancy of the faeces in water, the density reducing material should have a lower density than water, i.e. about 1000 kg/m$^3$. The lower the density of the material is, the stronger is the buoyancy of the faeces in water. Therefore, a feed according to the invention most preferably comprises a density reducing material with a density of less than about 250 kg/m$^3$.

In a preferred embodiment, the density reducing material has a granule size of about 20 to about 1000 $\mu$m. Since the material is admixed with feed for aquacultural animals the granule size of the material should correspond to the particle size of the other ingredients of the diet, such as to give a homogenous mixed feed product. Likewise, density reducing materials with a small granule size in relation to the size of the aquacultural animal is preferred because the granules can move through the intestinal tract of the aquacultural animal without interfering with the digestion process or even harming the animal.

In a preferred embodiment, the density reducing material has a compression strength of about 1 to about 50 N/mm$^2$, preferably about 2 to about 4 N/mm$^2$. During producing a feed for aquacultural animals, the feed's ingredients are extruded, thus, exposed to high shear forces. Therefore, the density reducing material should have a considerable compression strength such that it is not degraded during the extrusion process.

The density reducing material is cork granulate. Cork is a natural product harvested from cork oak (*Quercus suber)* having a low density of about 120 to about 240 kg/m$^3$, thus showing excellent buoyant properties. Cork is tolerant to changes of temperature, pressure and chemical reactions. In addition, cork granules are resistant to shear forces due to their extreme flexibility. For their particular chemical and physical properties these density reducing materials are particularly suitable to be admixed in a feed according to the invention.

In a preferred embodiment, the feed comprises the density reducing material in a concentration of about 1 to about 5 %, more preferred about 2,5 to about 5 %. In general, the optimal concentration of the density reducing material depends on the animal to be fed. However, the higher the concentration of the density reducing material, the stronger is the buoyant effect of the faeces. Commonly, feed additives are added to diets up to 2,5 % to prevent an attenuation of the nutritive value of the diet. Depending on the composition of the diet, however, concentrations of more than 2,5 % are applicable, since many aquacultural animals are able to compensate low nutritive values of diets by an increased feed ingestion.

In a preferred embodiment, the indigestible polysaccharide comprised in the feed as a faeces stabilizer is guar gum. Once dispensed into the water, faeces start to degrade, such that the density reducing material may become detached from the faeces. By adding a stabilizer, which reduces the disintegration process, the faecal particles rise towards the waters surface as firm aggregates. The indigestible compound forms net-like structures adhering the faecal components to each other. Particularly preferred as faeces stabilizers are indigestible polysaccharides, as e.g. guar gum, alginates, or xantham gum.

In a preferred embodiment, the feed further comprises a fermentation enhancing additive. During digestion, parts of the feed are not digested by enzymes produced by the animal but rather by microorganisms living in the animal's intestinal tract. These microorganisms degrade feed particles by fermentation, which is a process that leads to the formation of gases and short chain fatty acids, which have been shown to be effective at enhancing health and growth performance of fish and improve gut morphology. The gases are excreted in part by incorporation into the animal's faeces. The fermentation enhancing additive, comprised in the feed increases the production and incorporation of gases and thereby reduces the faeces' density and increases their buoyancy. Suitable additives are compounds, which cannot be digested by the animal's own enzymes but by intestinal bacteria, only. In a further preferred embodiment, the fermentation enhancing additive is selected from the group consisting of a fructo-oligosaccharide, a silicate mineral, inulin from industrial chicory, a mannan-oligosaccharide, raw potato starch, acacia gum and combinations thereof.

In a preferred embodiment, the aquacultural animal is cultured in flowing water. Since the faeces are floating towards the water surface they can be easily removed by running flowing water through a conventional filter, which would be preferred for aquacultures with flowing water. In an alternative embodiment, the aquacultural animal is cultured in stagnant water. Since the faeces produced upon feeding the feed of the invention can be easily collected from the water surface without the need of a fast continuous water flow, the feed is suitable for use in aquacultures with stagnant water. Depending on the environmental requirements of the animal cultured, aquacultures with flowing water of stagnant water are preferred.

In a preferred embodiment, the aquacultural animal is a fish, a crustacea or a mollusk. Aquacultures are most important for culturing aquatic animals which are served as food. The rising demand for fish and other aquatic animals from restaurants, food retail and food industry leads to the necessity of culturing animals outside their natural habitats, namely in land-based artificial aquacultures. So far, aquacultures have been established for a lot of different fish species as well as for crustaceans as e.g. shrimps and prawn and for mollusks as e.g. abalone, oysters, scallops, mussels, clams, cockles and arkshells. With respect to fish, many different species are cultivated in aquacultures, with the following being most frequently farmed: salmon, trout, grayling, smelts, cyprinids, e.g. carp and barbells, chichlids e.g. tilapia, pangas catfish, roho labeo, cod and catla.

In a further aspect, the invention relates to the use of cork granulate as an additive for a feed for an aquacultural animal, wherein the feed further comprises an indigestible polysaccharide and comprises the cork granulate in a concentration of about 0,25 to about 5 %. The density of the faeces produced by the aquacultural animal upon digestion of feed comprising cork granulate is considerably reduced, such that the faeces rise towards the water surface where they can be collected by conventional means. Thereby, the amount of suspended solids within the aquaculture is reduced and the effluent water of the aquaculture is efficiently cleared from faeces before it is released into the environment or reintroduced into the aquaculture.

In a further aspect, the invention relates to the use of cork granulate for manufacturing a feed for an aquacultural animal, wherein the feed further comprises an indigestible polysaccharide and comprises the cork granulate in a concentration of about 0,25 to about 5 %. By using cork granulate for such a manufacturing process, a feed is provided which leads to the formation of faeces of particular low density. These faeces are easy to remove from the water supporting a low-effort and cost-effective cleaning of the aquaculture water and increasing fish producing capacity without raising waste load.

In a further aspect, the invention relates to the use of a density reducing material for improving the health of an aquacultural animal, preferably of cultured fish. Feeding aquacultural animals with a feed comprising a density reducing material reduces the frequency of intestinal irritations or inflammations. This improves both, the quality of the cultured animals and the economic profit of the aquaculture.

Examples

Example 1

**Materials and methods**

Diets and Husbandry

Different diets were tested on randomly allocated duplicate groups of 50 rainbow trout (*Oncorhynchus mykiss, Störk* strain) of an initial body wet weight of 56,11 $\pm$ 9,06 g. Before the start of the experiment six randomly picked fish were examined for bacteriological, virological and parasitological pathologies by a federal veterinary institute (Staatliches Tierärzliches Untersuchungsamt Aulendorf, Germany). The experimental plant consisted of 2x10 green rounded-corner fiberglass tanks and the fish were housed in freshwater free of fish pathogens, which was supplied from a groundwater well to the flow-through system. Maximum rearing density was about 53,03 $\pm$ 7,7 kg/m$^3$ (mean $\pm$ S.D.). The water flow for each tank was adjusted to 5,5 L min$^{-1}$ and the photoperiod was fixed at 12L : 12D (Lumilux daylight lamps provided 200 lx at the water surface between 07:00 am and 07:00 pm) with a sigmoidal transition period of 10 min. Oxygen concentration and temperature were monitored continuously at the outlet of four tanks and were maintained at 12 mg/L $O_2$ and 15°C, respectively. The fish were fed six days a week (Sunday to Friday) *ad libitum*. For this purpose the fish were hand-fed twice a day under continuous observation of the animals' intake behavior until apparent satiation was reached, that is no more pellets were ingested. Feed usage was measured for every feeding.

Fish health, Specific Growth Rale, Feed Conversion Ratio, digestibility

At the beginning of the experiment each fish was anaesthetized, weighed, measured and visually inspected for external disorders. At the end of the experiment the fish were sacrificed. The lowermost faecal pellet was obtained by intestinal dissection, weighed and prepared for different examinations. In order to determine macropathological alterations like anaemia, structural disintegration, hyperaemia, necrosis or discolouration of ochre the livers were excised. The intestines were checked for inflammation, exudates and haemorrhages. The index of liver lesion, ($I_{LL}$), developed by Brinker and Hamers (2007) was used to score the degree and extent of each alteration:

$$I_{LL} = \sum_{df}(a * w_{df})$$

*; where df = diagnostic finding; a = score value; w = importance factor; possible range of $I_{LL}$ = 0–32.* (1)

The Specific Growth Rate (SGR) was calculated as follows using the mean weights recorded at the beginning and the end of the experiment:

$$SGR\,[\%day^{-1}] = \frac{\ln_{(mean\,final\,weight)} - \ln_{(mean\,initial\,weight)}}{t_{(final\,date)} - t_{(initial\,date)}} * 100$$ (2)

The feed conversion ratio (FCR) was calculated using the following equation:

$$FCR = \frac{Feed[kg]}{Weight\,gain[kg]} \qquad (3)$$

Sampling of faeces

Sampling was done over a period of four days at the end of the feeding experiment. Samples were collected from five tanks per day from 08:00 am to 11:00 am. Fish were anaesthetized and sacrificed. Mucus sheathed faecal pellets were removed by intestinal dissection and kept in aluminum dishes at 4°C to prevent microbial degradation. All measurements were performed within 8 hours of dissection.

Density measurements

The density of the faeces was measured using an Anton Paar DMA 38 density meter. The device has an oscillating U-tube with a characteristic oscillation frequency that is activated electronically. This frequency changes when faeces are injected depending on their density and hence by precise determination of the frequency and appropriate adjustments the density can be measured. The tube is temperated due to the high temperature dependency of density. For the measurement the faeces were collected by dissection as above-mentioned from a defined section of the intestine. Per treatment the faeces of 10 fish were pooled to obtain an amount of at least 7 g. As a change in density might occur due to water absorption faeces were also measured after being moistened for the duration of one hour in water from the system or in distilled water. Each measurement was done in duplicate.

Particle size distribution (PSD)

For the particle size measurements samples were analyzed immediately. By using a constant air stream from below with air pressure and agitation duration settings of 0,05 MPa and 480 s, 3 g wet weight of faeces were broken up in a 2L-distilled water tank to resemble turbulence in a fish farm (Brinker et al., 2005). By using a non-invasive laser particle sizer (GALAI:CIS-1) equipped with a flow controller (GALAI:LFC-100) and a flow-through cell (GALAI:GM-7) according to Brinker et al. (2005) particle sizes were determined. The measurements were done in duplicate.

Rheological measurements

After dissection, faeces were cooled to about 0°C and transferred to the rheometer (Paar Physica-Physica UDS 200). Measurements were done according to Brinker (2009) The measuring system applied was a MP 313 (plate: ∅ 50 mm, 0°) with a gap width of 1 mm. Shear stress factor and shear force were 2,037 and 2,617, respectively. For the time sweep a deformation with an amplitude of y = 60 % a frequency of 1 Hz was used. For each measurement 3 g wet weight of faeces were applied. Measurement was done in triplicate.

Settling velocity

Assuming that the faecal pariicies are solid spheres under laminar conditions settling velocity can be calculated by using Stoke's law:

$$v_S = \frac{g * (\rho_P - \rho_L) * D_P^2}{18 * \mu_L} \quad ;$$

where $v_s$ is the settling velocity of a discrete particle, g is the acceleration due to gravity, $\rho_p$ is the density of the particle, $\rho_L$ is the density of the liquid, $D_p$ is the diameter of the particle and $\mu_L$ is the viscosity of the liquid.

The volumetric flow per area $V_o$ or the overflow rate (OFR) is a crucial factor for predicting the settling capacity of faeces in a sedimentation basin:

$$V_0 = \frac{Q}{A};$$

where Q is the volumetric flow rate and A is the basin area. All particles with a settling velocity greater than $V_0$ will settle out in the settling basin. Remaining particles will settle out in the ratio $\frac{V_S}{V_0}$. By using these formulas with the measured densities of the faeces settling velocity has been calculated for each size class and the removal efficiency for three given overflow rates has been determined. Overflow rates that are recommended for optimal aquacultural effluent management are highly variable in the range from 48,9 $m^3m^{-2}d^{-1}$ and 342 $m^3m^{-2}d^{-1}$. For calculation three overflow rates in the recommended range were used.

**Results**

Diet analysis

In a 24-week feeding trial eight commercial fish diets were tested. To measure digestibility of the feed components Yttriumoxide ($Y_2O_3$) was coated on top of the pellets. Crude chemical composition of the diets as determined is shown in **table 1.**
Diets 1 to 8 contained the following ingredients:

Diet 1:    fishmeal, fish oil, wheat starch, fish solubies, wheat gluten, lysine;
Diet 2:    fishmeal, fish oil, soy meal, blood meal, rape cake, sunflower seed meal, rape oil, wheat, horse bean, peas;
Diet 3:    fishmeal, fish oil, soy meal extract, wheat, hemoglobin powder, Premix (minerals and vitamins at minimal levels according to NRC, 1993);
Diet 4:    fishmeal, fish oil, rape expeller, hemoglobin, wheat, wheat flour, lysine;
Diet 5:    fishmeal, fish oil, blood meal, wheat, horse bean, sunflower seed meal, rape oil, soy beans, peas, copper;
Diet 6:    fishmeal, fish oil, horse bean, soy bean meal, wheat gluten, hemoglobin powder derived from pig, hydrolysed feathermeal, palm oil, rape oil, copper;
Diet 7:    fishmeal, fish oil, soy bean meal, wheat, hemoglobin powder, rape oil, rape cake, nitrogen free extract (NFE)/carbonhydrate
Diet 8:    fishmeal, fish oil, wheat, soy oil, peas, copper, algae, corn wheat, yeast, vitamins and minerals

**Table 1 :** Crude chemical composition of the diets as determined

| Diet | 1 | 2 | 3 | 4 | 5 | 6 | 7 | 8 |
|---|---|---|---|---|---|---|---|---|
| **CP[1]** | 42,35 | 40,19 | 41,53 | 40,4 | 40,8 | 43,73 | 41,84 | 36,23 |
| **CL[2]** | 26,94 | 20,42 | 26,11 | 8,16 | 23,59 | 15,5 | 22,24 | 22,7 |
| **CC[3]** | 8,4 | 10,44 | 9,91 | 20,34 | 9,86 | 13,27 | 9,98 | 11,96 |
| **TPh[4]** | 1,09 | 1,00 | 1,18 | 1,29 | 0,86 | 0,96 | 1,07 | 1,30 |
| **GE[5]** | 22,08 | 19,35 | 21,82 | 16,26 | 20,64 | 18,73 | 20,38 | 19,57 |
| **DE[6]** | 17,61 | 15,37 | 17,54 | 11,30 | 17,33 | 13,47 | 15,57 | 15,08 |
| **DCP DE-1[7]** | 19,70 | 20,94 | 19,78 | 24,92 | 18,80 | 25,27 | 20,99 | 17,26 |

[1]crude protein, [2]crude lipid, [3]crude carborthydrates, [4]total phosphor, [5]gross energy [kJ/g dry matter], [6]digestible energy kJ/g dry matter], [7]DCP DE1: digestible crude protein per digestible energy [g/MJ];

The analyses of the essential dietary components revealed partly considerable deviations to the ones declared by the manufacturer. **Table 2** shows the values of the relative change to the declared values. Three of the diets (Diet 1, 2 and 6) had significant less protein content ($p<0,05$). Diet 1 showed remarkable variations with 25,7 % less dietary protein ($p<0,05$) and 79,6 % more lipid ($p<0,05$) than indicated on the product label. In addition, all diets except diet 6 and diet 8 showed significant deviations from the declared lipid values and the content of phosphor likewise did not correspond to the values given on the product label with 4 diets deviating significantly (p<0,05).

**Table 2:** Relative deviation of protein, lipids and phosphor from the values according to product information.

| Diet [%] | 1 | 2 | 3 | 4 | 5 | 6 | 7 | 8 |
|---|---|---|---|---|---|---|---|---|
| **Protein** | - 25,7* | - 4,3* | - 3,4 | + 1,0 | - 5,1 | - 7,0* | - 2,7 | - 9,4 |
| **Lipid** | + 79,6* | - 7.2* | - 6,8* | - 32,0* | - 12,6* | + 10,7 | - 20,6* | - 9,2 |
| **Phosphor** | -9,2* | - 9,1* | + 31,1* | + 61,25 | - 4,4 | - 12,7 | + 18,9* | + 8,3 |

\* (p<0,05).

Fish health, Specific Growth Rate, Feed Conversion Ratio, digestibility

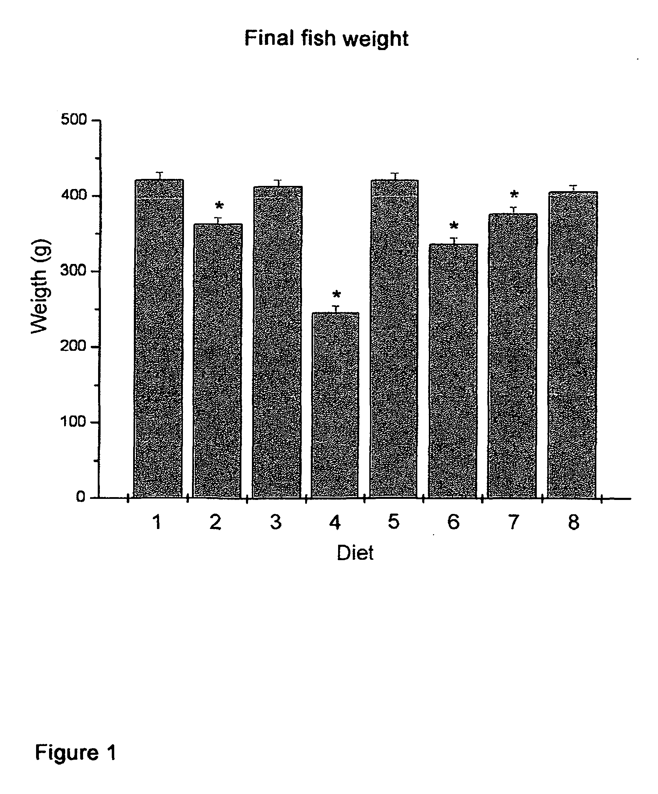

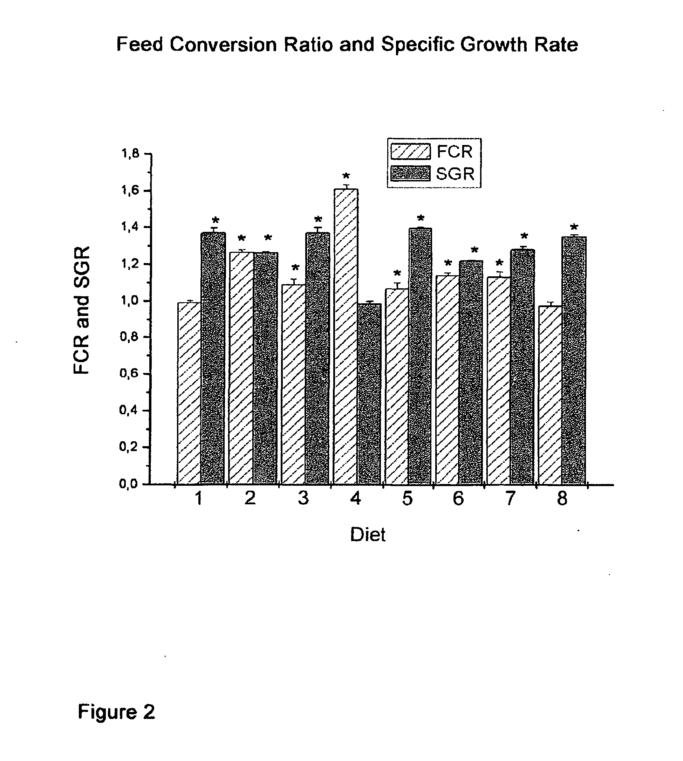

Stock density increased from $8,48 \pm 0,18$ kg/m$^3$ (mean $\pm$ S.D.) at the beginning to $53,03 \pm 7,7$ kg/m$^3$ (mean $\pm$ S.D.) at the end of the experiment. Fish fed very well during the experimental period and no abnormalities were observed. However, at the end of the experiment fish which were fed with diet 4 showed strong deformation of the body, intestinal irritations und darkening of the body color, probably due to malnutrition. Analysis of the livers revealed disorders in 36,49 % of all fish (specifically, anemia in 11,74 %, hyperaemia/haemorrhage in 13,4 %, discoloration of ochre in 18,95 %, necrosis in 3,67 % and textural disintegration in 0,57 % of the samples examined). Fish fed with diet 2 showed significantly less liver lesions than the rest (p<0,05). The indices of liver lesion ($I_{LL}$) among impaired livers were in the range of $1,81 \pm 0,38$ (diet 1) to $3,23 \pm 0,34$ (diet 4) (mean $\pm$ S.E.) with no significant difference between the groups (p=0,057). Examination of the intestines revealed inflammation in 3,54 % of all fish, with diet 6 causing significantly more inflammations than the other diets (p<0,05). In the treatments overall mortalities between 0,5 % (diets 4 and 6) and 4 % (diet 1) were recorded without statistically significant differences between treatments (p = 0,67). Mean final weight of the fish ranged from $244,65$ g $\pm 52,78$ (diet 4) to $421,39$ g $\pm 83,88$ (diet 1) (mean $\pm$ S.D.) with significant differences between the diets (p<0,0001) (**figure 1**). SGR varied explicitly between $0,98$ % d$^{-1}$ $\pm 0,012$ % d$^{-1}$(diet 4) and $1,39$ % d$^{-1}$ $\pm 0,012$ % d$^{-1}$ (p<0,0001) (diet 5) (mean $\pm$ S.E.) (**figure 2**). Best growth performance showed the fish that were fed with diet 5, followed by diet 1 and 3. Diet 8, 7 and 2 also led to growth rates above 1,25 % d$^{-1}$. Lowest FCR generated diet 8 with $0,97 \pm 0,017$ (mean $\pm$ S.E.), worst FCR was yielded by diet 4 with $1,61 \pm 0,017$ (mean $\pm$ S.E.) (**figure 2**). Mean final weight of the fish varied considerably, with diet 4 causing very poor growth and low FCR and SGR. Regarding the measured energy values diet 4 does not meet the requirement of digestible energy for optimum growth with 11.3 kJ g$^{-1}$ DE per g dry due to a low lipid content of 8.16 %. Another striking factor of diet 4 is the high proportion of carbohydrates with 20,3% -roughly twice as much as the other diets - and mainly facilitated by canola cake as well as wheat and wheat flour. Canola cake contains a high percentage of non-starch polysaccharides, which has adverse effects on fish digestion and feed conversion. Since diet 4 revealed the lowest lipid digestibility of all diets with 61,6 %, this supports the hypothesis that a high fraction of non-starch polysaccharides (NSP's) impairs lipid digestibility. Even though the value does not differ statistically from the other diets due to the small sample size with two tanks per diet, this is of relevance in practice and certainly attributes to the poor growth observed in this treatment. Altogether apparent digestibility is far below the expected range for all diets. Only diet 1 and 8 revealed a FCR of 1 which surely can be expected by a commercial diet. Under optimal conditions like the system applied here, the FCR was expected to be even better than 1. Despite the different growth potentials of the diets Specific Growth Rate of all diets except diet 4 was moderate. This indicates, that the diets overall met the requirements of the fish. About a third of all fish showed liver alterations. Most of them were slight and corresponded to expected levels in aquaculture feeding on extruded high energy diets and could be ascribed to dietary imbalances, especially between saturated and unsaturated fatty acids. Severer liver alterations as e.g. necrosis were observed with diet 4 generating almost four times as much necrosis as the other diets. This might be attributable to an insufficient supplementation of antioxidants leading to oxidation of the lipids (they become rancid) which aggravates the slight liver alterations that are typical for aquaculture produced fish. Diet 2 showed significantly fewer alterations of livers probably reverse attributable to a balanced diet with a suitable rationing of vitamins and antioxidants. Frequency of inflammation of intestines was highest for diet 6, possibly attributed to the fact of a high content of soy meal und broad bean.

Stability of faeces, particle size distribution and removal efficiency

Analysis of the faecal stability revealed a broad range from 1216 Pa s to 345 Pa s for elastic modulus and 233 to 54 Pa for viscosity (**table 3**). These data are in accordance with the particle size distributions of the diets. Faeces of diet 8 showed the highest viscosity and elastic modulus, whereas diet 3 lead to faeces of poor stability. All faeces showed a decay of viscoelastic functions over time due to viscoelastic relaxation, which was most pronounced for diets 6 and 8.

**Table 3:** Mean values of viscosity and elastic modulus of faeces from trout fed with commercial diets.

| | Elastic modulus | Viscosity |
|---|---|---|
| Diet | Mean ± S.E. | Mean ± S.E. |
| 1 | 803,93[b] ± 39,9 [Pa] | 164,265[b] ± 7,6 [Pa s] |
| 2 | 450,55[cd] ± 39,9 [Pa] | 93,058[cd]± 7,6 [Pa s] |
| 3 | 345.39[d] ± 39,9 [Pa] | 54,719[e]± 7,6 [Pa s] |
| 4 | 459,25[cd] ± 39,9 [Pa] | 75,101[de]± 10,7 [Pa s] |
| 5 | 565,53[c] ± 46,0 [Pa] | 102,621[cd]± 6,8 [Pa s] |
| 6 | 854,11[b] ± 40,4 [Pa] | 185,847[b]± 7,7 [Pa s] |
| 7 | 603,02[c] ± 39,9 [Pa] | 123,600[c]± 7,6 [Pa s] |
| 8 | 1216,42[a] ± 41,7 [Pa] | 233,488[a]± 7,9 [Pa s] |

Means within a column that do not share a common superscript letter are significantly different (p<0.05).

Particle size distributions (PSD) of the faecal waste produced by rainbow trout are shown in **table 4,** providing the percentage of total particle volume below 100 $\mu$m and below 600 $\mu$m for each treatment. Diet 8 generated fewest fines with 4.8 % of all particles being smaller than 100 $\mu$m and 79 % being larger than 600 $\mu$m. Diet 5 generated the highest percentage of particles below 600 $\mu$m and had about 15 % more small particles below 100 $\mu$m and 53 % more particles below 600 $\mu$m compared to diet 8.

**Table 4:** Percentages of particles with volumes below 100 $\mu$m and below 600 $\mu$m of total suspended faecal particles.

| | Particle size distribution | |
|---|---|---|
| | Below 100 $\mu$m | Below 600 $\mu$m |
| Diet | Cum.% | Cum.% |
| 1 | 11.8 ± 0.89 * | 45.1 ± 0.84* |
| 2 | 17.8 ± 0.89 * | 64.9 ± 0.83 * |
| 3 | 17.7 ± 0.89 * | 70.9 ± 0.85* |
| 4 | 12.0 ± 0.89 * | 65.1 ± 0.83* |
| 5 | 20.1 ± 1.25 * | 73.3 ± 1.471 * |
| 6 | 7.3 ± 0.92 | 33.4 ± 0.87 * |
| 7 | 13.4 ± 0.88 | 55.3 ± 0.83 * |
| 8 | 4.8 ± 0.88 | 20.7 ± 0.84 |

Percentages of total particle volume below 100 $\mu$m and below 600 $\mu$m ± SE of suspended faecal particles originating from fish fed commercial and all-vegetarian diets. Cumulative means with an asterisk are significantly different from the smallest value (P<0.05).

Data of faecal stability are in accordance with the particle size distributions of the diets. For example, diet 8 revealed the highest stability of faeces and the percentage of small particles was marginal. Diet 1 and 6 also revealed high stability data, which is in accordance with PSD's. These findings emphasize the relationship of faeces' stability and advantageous particle size distribution, namely a high percentage of large particles, which can easily be removed from the water. The amount of particles below 100 $\mu$m is an important factor to be considered because removal of those small particles is particularly cost-intensive and technically complex, especially in recirculating systems. As fine particles might have a direct impact on fish heaith, distribution towards large particles is desirable. Altogether PSD's are quite variable and individual among the diets.

Density measurements

Density of faeces increased significantly during the experiment (p=0,0039) with a mean density over all treatments of 1,036 ± 0,0018 g/cm$^3$ (mean ± S.E.) after 12 weeks and of 1,043 g/cm$^3$ ± 0,0017 g/cm$^3$ (mean ± S.E.) at the end of the experiment. It is conceivable that there is a positive correlation of faecal density with the fish size as there is of fish size and faecal particle size.

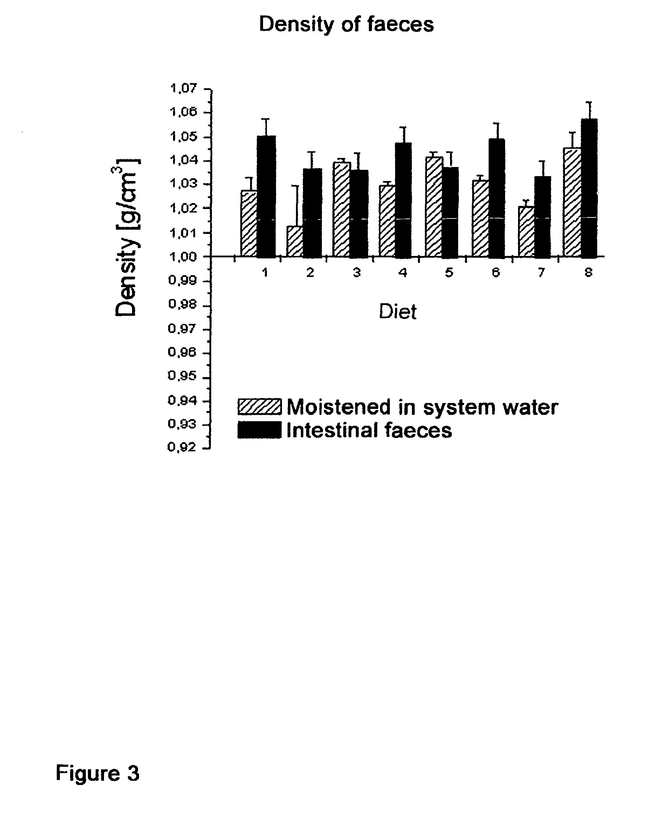

The density of the intestinal faeces varied considerably among the different diets (**figure 3, table 5**). Faeces moistened in system water or distilled water had significant lower densities than the intestinal faeces (p<0,0001) (**figure 3**) whereas no difference was observed between the density of faeces moistened in distilled water and system water (p=0,9431). Diet 8 showed the highest density of moistened faeces with $1.04547 \pm 0.00692$ g/cm$^3$, lowest density was caused by diet 2 with $1.01270 \pm 0.00692$ g/cm$^3$. The difference in density between moistened faeces and non-moistened faeces (intestinal faeces) is likely to be due to that faeces absorb water when moistened, thereby approximating the density of water. The results obtained in this study suggest that faecal density and particle size distribution are related to the diet components.

**Table 5:** Density $\pm$ S.E. of intestinal faeces and faeces moistened in either system or distilled water for 1 h.

| | Density (g/cm$^3$) $\pm$ S.E. | | |
|---|---|---|---|
| **Diet** | **Moistened faeces in distilled water** | **Moistened faeces in system water** | **Intestinal faeces** |
| **1** | $1.02995 \pm 0.00611$ | $1.02757 \pm 0.00692$ | $1.04906 \pm 0.00362$ |
| **2** | $1.02520 \pm 0.00705$ | $1.01270 \pm 0.00692$ | $1.02663 \pm 0.00388$ |
| **3** | $1.02143 \pm 0.00611$ | $1.03903 \pm 0.00799$ | $1.03604 \pm 0.00388$ |
| **4** | $1.02430 \pm 0.00864$ | $1.02935 \pm 0.00692$ | $1.04796 \pm 0.00388$ |
| **5** | $1.03243 \pm 0.00611$ | $1.04160 \pm 0.00262$ | $1.03906 \pm 0.00362$ |
| **6** | $1.04303 \pm 0.00611$ | $1.03173 \pm 0.00692$ | $1.04214 \pm 0.00362$ |
| **7** | $1.01533 \pm 0.00611$ | $1.02100 \pm 0.00692$ | $1.03228 \pm 0.00421$ |
| **8** | $1.05243 \pm 0.00611$ | $1.04547 \pm 0.00692$ | $1.04782 \pm 0.00419$ |

Settling velocity and theoretical sedimentation removal efficiency

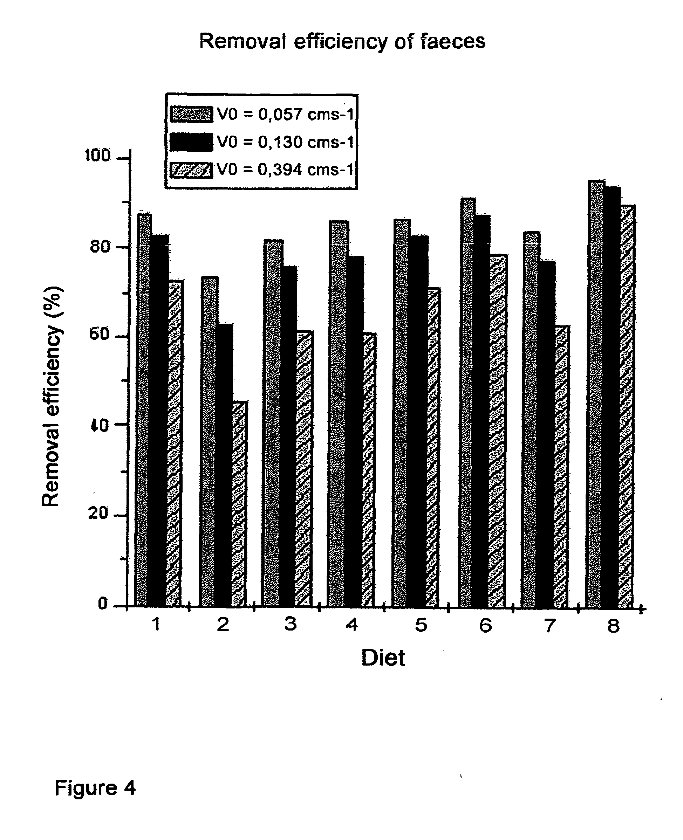

Settling velocities of different particles size classes were analyzed for faeces resulting from diets 4, 5 and 8. Faeces from diet 8, which had the highest density, showed likewise the highest settling velocities in all particle size classes. In addition, analyzes of theoretical removal efficiencies were performed with three different OFR's considering the individual particle size distributions and faecal density. This resulted in variable removal efficiencies as presented in **figure 4.** Removal efficiency was best for all diets with an OFR of 0,13 cms$^{-1}$, poorest removal efficiency was generated with an OFR of 0,394 cms$^{-1}$ and diet 8 generated the highest removal efficiency for all OFRs. **Figure 4** shows the effect of changing the ORF on the removal efficiency in a settling basin with an increase in the ORF generating lower removal efficiencies in all diets. In particular, reducing the ORF by half led to a distinct increase in removal efficiency (**table 6**).

**Table 6:** Percentaged improvement of the theoretical removal efficiency in a sedimentation device by halving the OFR (all values given in %).

| | Diet 1 | | Diet 2 | | Diet 8 | |
|---|---|---|---|---|---|---|
| **V$_0$** | **RE[1]** | **Impr.[2]** | **RE[1]** | **Impr.[2]** | **RE[1]** | **Impr.[2]** |
| **2** | 60,7 | / | 37,2 | / | 82,6 | / |
| **1** | 63,7 | 4,9 | 39,4 | 5,7 | 84,9 | 2,7 |
| **0,5** | 69,5 | 9,1 | 43,6 | 10,8 | 88,4 | 4,1 |
| **0,25** | 76,9 | 10,6 | 52,0 | 19,3 | 91,4 | 3,5 |
| **0,125** | 82,8 | 7,8 | 63,3 | 21,7 | 93,9 | 2,7 |
| **0,05** | 88,0 | 6,2 | 74,8 | 18,2 | 95,6 | 1,9 |

[1]removal efficiencies [2]Improvement of removal efficiencies

Moreover, the practical impact of faeces stability and particle size becomes apparent when looking at the theoretical removal efficiencies calculated for a drum filter equipped with a 30 $\mu$m, 60 $\mu$m, or 100 $\mu$m gaze, respectively (**table 7**). Treatment efficiencies vary considerably within the ranges of 90.4 % and 97.3 % for a 30 $\mu$m screen, within 82.5 % and 95.6 % for a 60 $\mu$m screen and within 79.9 % and 95.2 % for a 100 $\mu$m screen. Those differences are significant for practice as they indicate that the identification of the most cost-effective or efficient pore sizes should be chosen to suit the characteristics of the effluents to be treated.

Since faeces are fragmented to smaller particles in dependence of faecal stability that in turn varies with the diet, it is reasonable to examine settling velocities in conjunction with the respective particle size distribution and faeces density to predict the removal efficiency of a settling basin. Faecal settling velocitiy in this study was calculated by using Stoke's law under the assumption that the particles are solid spheres under laminar conditions. By juxtaposition of settling velocity data with faecal density and particle size distribution and the consideration of the ratio of settling and non settling solids, an approach of theoretical removal efficiencies was determined. **Table 7** shows a comparison of removal efficiencies of a sedimentation basin with different OFR's and a drum filter equipped with two different gazes. Diet 4 e.g. with an average density and PSD has a removal efficiency of 78 % in a sedimentation device with a middle OFR. When a drum filter equipped with a 60 $\mu$m gaze is used, removal efficiency is about 12 % higher. The effect is even more pronounced for diet 2, which has a low density and an unpropitious PSD: Removal efficiency is improved by 21 % when a drum filter is engaged. Diet 8 with the most advantageous PSD and the highest faecal density has a high removal efficiency either by sedimentation and microsieving. Overall microsieving seems to be much more efficient and robust whereas treatment by sedimentation is subject to considerable variations. Furthermore the effectiveness of sedimentation is limited by the total suspended solid (TSS) load.

Table 7: Removal efficiency of a sedimentation basin with three different OFR's and a drumfilter equipped with a 60 $\mu$m and 100 $\mu$m gaze, respectively.

| | Removal efficiency (%) | | | | | |
|---|---|---|---|---|---|---|
| | OFR | | | gaze size | | |
| Diet | 0.057cms$^{-1}$ | 0.13cms$^{-1}$ | 0.394cms$^{-1}$ | 30 $\mu$m | 60 $\mu$m | 100 $\mu$m |
| 1 | 87.5 | 82.6 | 72.0 | 92.9 | 89.6 | 88.2 |
| 2 | 73.5 | 62.8 | 45.9 | 90.6 | 84.4 | 82.2 |
| 3 | 81.5 | 75.5 | 61.3 | 90.4 | 84.8 | 82.3 |
| 4 | 86.2 | 78.0 | 61.0 | 94.4 | 90.3 | 88.0 |
| 5 | 86.5 | 82.5 | 71.1 | 90.5 | 82.5 | 79.9 |
| 6 | 91.2 | 87.4 | 78.4 | 95.9 | 93.5 | 92.7 |
| 7 | 83.6 | 77.1 | 62.7 | 92.5 | 88.5 | 86.6 |
| 8 | 95.5 | 93.8 | 89.5 | 97.3 | 95.9 | 95.2 |

Diet 2 reveals the lowest removal efficiency with 62.8 % in a sedimentation basin. This is attributable to a low density and a unpropitious PSD with a high percentage of small particles that are not settleable within the given OFR. Diet 5 also showed an unpropitious PSD with the highest percentage of particles below 100 $\mu$m of all diets, but due to a high density removal efficiency in the sedimentation basin is about 20 % improved. Diet 6 has despite a lower density than diet 5 a higher removal efficiency due to larger particles. Given the fact that faeces stability led to variable particle size distributions the description of a median settling velocity is insufficient in order to calculate removal efficiencies. Settling velocity has to be analysed taken into account both the size and the density of particles. And both are highly variable among different diets. Therefore, final removal efficiency is a function of the complete PSD with density further complicated by particle interaction. Settling velocities of faecal particles in this study larger than 600 $\mu$m were ranging from 2,05 to 8,44 cm s$^{-1}$, while smaller particles between 100 $\mu$m and 300 $\mu$m ranging from 0,022 to 0,093 cm s$^{-1}$ (**table 8**).

Table 8: Median settling velocities of faecal particles of different size classes.

| | $V_s$[cm/s] | | | |
|---|---|---|---|---|
| Diet | <100 $\mu$m | 100-300 $\mu$m | 300-600 $\mu$m | >600 $\mu$m |
| 1 | 0,0028 | 0,057 | 0,308 | 5,191 |
| 2 | 0,0013 | 0,027 | 0,148 | 2,489 |
| 3 | 0,0039 | 0,080 | 0,432 | 7,271 |
| 4 | 0,0030 | 0,061 | 0,327 | 5,514 |
| 5 | 0,0041 | 0,085 | 0,459 | 7,739 |
| 6 | 0,0032 | 0,065 | 0,353 | 5,945 |
| 7 | 0,0021 | 0,044 | 0,237 | 3,997 |
| 8 | 0,0045 | 0,093 | 0,501 | 8,443 |

Example 2 - Fermentation

Fish were cultured and analyzes were performed as described above.

Fish digest nutrients mainly through endogenous enzymes within the stomach or intestine. In contrast, indigestible components as for example non-starch-polysaccharides (NSP) are degraded by intestinal bacteria by fermentation. In the process of fermentation NSPs are converted into carbon dioxide ($CO_2$), hydrogen ($H_2$), methane ($CH_4$) and volatile acids as e.g. acetic acid, propionic acid and butyric acid. Therefore, NSPs are suitable for stimulating bacterial fermentation in the intestine of fish. By increasing bacterial fermentation also the production of intestinal gases is increased, which in turn become incorporated into the fish's faeces. This effect was used to reduce the faeces density.

*In vitro* incubation of NSPs with faeces

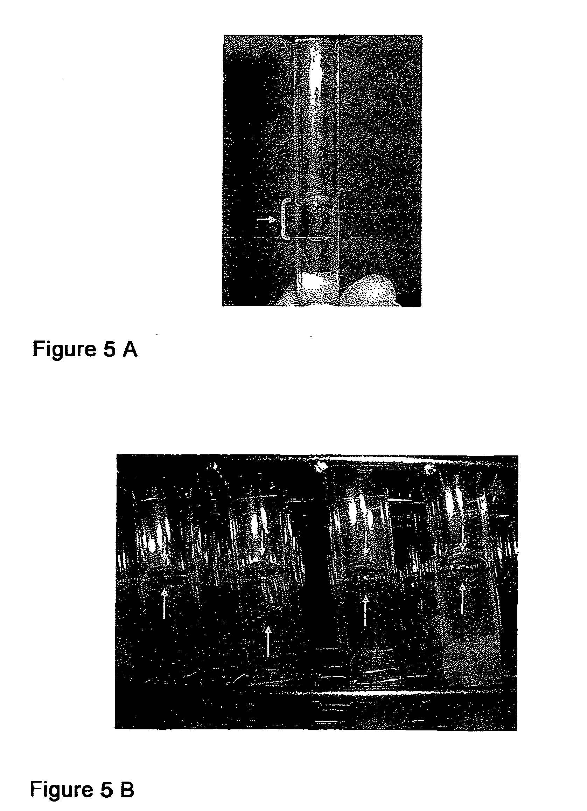

Testing various indigestible compounds, those having a branched and complex structure were found to be most suitable for increasing gas production during the digestion process of fish. In total five different NSPs were tested, namely inulin from industrial chicory, fructo-oligosaccharide, mannan-oligosaccharide, raw potato starch, and acacia gum. Each NSP was incubated together with faeces particles, which served as an inoculum. A further inoculum was incubated in the presence of the NSP guar gum, which was used as a faeces stabilizer in most experiments and may contribute to the formation of gas as well. Besides NSPs other compounds can enhance fermentation by providing particularly large surface areas for colonizing bacteria. In this respect two silicate minerals, vermiculite and Agil Prefect (Damolin, Denmark) were tested. Vermiculite consists of aluminum-iron-magnesium-silicate with a surface area of 500 $m^2$/g. Likewise, Agil Prefect displays a surface area of about 600 $m^2$/g and is additionally coated with acids and fructo-oligosaccharide supporting the production of lactic acid bacteria within the intestine. Faeces were sampled from trout fed with commercial diets. Each inoculum was incubated with 100 mg NSP or silicate mineral incubated for 48 hours (setup: 3 x 27 treatments; 20 μg faeces in isotonic solution). In total, at least six single experiments were performed for each fermentation enhancing additive. Samples containing either faeces or a fermentation enhancing additive alone were used as controls. Gas production was detected using a closed 15 ml culture tube containing the inoculum. On top of the inoculum a second, smaller culture tube was inserted, such that the generated gas accumulated within the second tube, thereby raising it (**figure 5**). The quantity of developed gas during incubation was determined by calculation of the volume of the produced gas bubble using following formula:

$V = 4/3 * \pi * r^2 + r^2 * h$. The experiments revealed that fructo-oligosaccharide and vermiculite enhanced the production of gas most efficiently. Therefore, both were tested *in vivo*.

Enhanced fermentation *in vivo*

Diet compositions based on conventional fish feed were produced as summarized in **table 9,** wherein diet A comprised no additives and was used as a control. In addition to manual feeding, fish were provided with food through an automatic feeding system throughout the day. After five months the fish were sacrificed and subjected to further analysis. Sample of faeces were taken during and at the end of the experiment.

**Table 9:** Composition of test feed A - G for studying fermentation by intestinal bacteria

| Diet | A | B | C | D | E | F | G |
|---|---|---|---|---|---|---|---|
| Protein % | 44 | 44 | 44 | 44 | 44 | 44 | 44 |
| Fat % | 26 | 26,21 | 26,95 | 27,31 | 27,68 | 27,06 | 27,79 |
| Dry matter % | 94 | 94 | 94 | 94 | 94 | 94 | 94 |
| NV[1], MJ/kg | 23,16 | 23,16 | 23,16 | 23,16 | 23,16 | 23,16 | 23,16 |
| Fish meal | 34,8 | 34,81 | 34,82 | 34,83 | 34,84 | 34,82 | 34,84 |
| Pea protein | 10 | 10 | 10 | 10 | 10 | 10 | 10 |
| Soy cake | 8 | 8 | 8 | 8 | 8 | 8 | 8 |
| Wheat gluten | 8 | 8 | 8 | 8 | 8 | 8 | 8 |
| Methionine | 0,06 | 0,06 | 0,06 | 0,06 | 0,06 | 0,06 | 0,06 |
| Wheat | 13,37 | 13,37 | 13,37 | 13,37 | 13,37 | 13,37 | 13,37 |
| Tapioca starch | 5 | 4,45 | 2,38 | 1,35 | 0,31 | 2,07 | 0 |
| Fish oil | 12,56 | 12,76 | 13,53 | 13,92 | 14,3 | 13,65 | 14,42 |
| Rape oil | 8,67 | 8,67 | 8,67 | 8,67 | 8,67 | 8,67 | 8,67 |

(continued)

| Diet | A | B | C | D | E | F | G |
|---|---|---|---|---|---|---|---|
| Guar gum | 0 | 0,3 | 0,3 | 0,3 | 0,3 | 0,3 | 0,3 |
| FOS[2] | 0 | 0 | 1 | 1,5 | 2 | 1 | 2 |
| Vermiculite | 0 | 0 | 0 | 0 | 0 | 0,15 | 0,15 |
| Yttrium | 0,03 | 0,03 | 0,03 | 0,03 | 0,03 | 0,03 | 0,03 |
| MCaP[3] | 0,22 | 0,19 | 0,19 | 0,18 | 0,18 | 0,19 | 0,18 |
| Vitamins | 0,715 | 0,715 | 0,715 | 0,715 | 0,715 | 0,715 | 0,715 |
| Moisture | -1,43 | -1,35 | -1,07 | -0,92 | -0,78 | -1,02 | -0,74 |
| Total | 100 | 100 | 100 | 100 | 100 | 100 | 100 |
| Phosphor[4] | 1,07 | 1,07 | 1,07 | 1,07 | 1,07 | 1,07 | 1,07 |
| Arginine[4] | 24,5 | 24,5 | 24,5 | 24,51 | 24,51 | 24,5 | 24,51 |
| Cysteine[4] | 5,68 | 5,68 | 5,68 | 5,68 | 5,68 | 5,68 | 5,68 |
| Histidine[4] | 9,31 | 9,31 | 9,31 | 9,31 | 9,31 | 9,31 | 9,31 |
| Isoleucine[4] | 17,89 | 17,89 | 17,89 | 17,89 | 17,9 | 17,89 | 17,9 |
| Leucine[4] | 32,12 | 32,13 | 32,13 | 32,14 | 32,14 | 32,14 | 32,14 |
| Lysina[4] | 28,81 | 28,81 | 28,82 | 28,82 | 28,83 | 28,82 | 28,83 |
| Methionine[4] | 9,76 | 9,76 | 9,76 | 9,76 | 9,76 | 9,76 | 9,76 |
| Phenylalanin[4] | 18,18 | 18,18 | 18,18 | 18,19 | 18,19 | 18,18 | 18,19 |
| Threonine[4] | 17,12 | 17,12 | 17,13 | 17,13 | 17,13 | 17,13 | 17,13 |
| [1]Nutritive Value, [2]Fructo-Oligosaccharide, [4]Monocalcium phosphate. [4]calculated values | | | | | | | |

Of all nutrients, the digestion of fat and protein is most significant for fish growth performance. Therefore, the digestibility of all diets was analyzed with the results shown in **table 10.**

**Table 10:** Digestibility of nutrients

| | Digestibility | | | |
|---|---|---|---|---|
| Diet | Fat % | Protein % | Phosphor % | Starch % |
| A | 91,4 ± 1,8 | 90,3 ± 3,8 | 58,8 ± 3,9 | 88,9 ± 0,1 |
| B | 90.6 ± 3,7 | 91,3 ± 0,2 | 59,2 ± 2,2 | 89,4 ± 0,6 |
| C | 91,7 ± 3,2 | 89,4 ± 0,8 | 61,8 ± 1,8 | 87,3 ± 0,7 |
| D | 87,4 ± 2,9 | 89,1 ± 2,3 | 57,7 ± 3,1 | 83,5 ± 0,7 |
| E | 94,3 ± 0,3 | 91,6 ± 0,2 | 58,4 ± 0,4 | 84,0 ± 1,8 |
| F | 89,0 ± 3,0 | 89,2 ± 1,4 | 55,0 ± 0,6 | 84,1 ± 0,2 |
| G | 92,4 ± 1,1 | 89,6 ± 2,3 | 58,5 ± 2,6 | 83,7 ± 0,7 |

In addition, the effect of the fermentation enhancing additives on the density of faeces was evaluated as described above. The faeces were analyzed immediately after sampled from the fish (intestinal faeces) or after moistening the faeces in water for one hour. As shown in **table 11,** diet F with fructo-oligosaccharide and vermiculite had the most prominent effect on faecal density *in vivo.*

**Table 11:** Density of intestinal faeces and faeces moistened in water

| Intestinal faeces | | | Faeces moistened in system water | | |
|---|---|---|---|---|---|
| Diet | Mean | S.E. | Diet | mean | S.E. |
| A | 1,03885 | 0,01 | A | 1,03515 | 0 |
| B | 1,03790 | 0,01 | B | 1,02388 | 0,01 |
| C | 1,04368 | 0,01 | C | 1,02778 | 0,01 |
| D | 1,05028 | 0 | D | 1,02608 | 0,01 |
| E | 1,04022 | 0,02 | E | 1,03167 | 0,01 |

(continued)

| | Intestinal faeces | | | Faeces moistened in system water | | |
|---|---|---|---|---|---|---|
| Diet | Mean | S.E. | Diet | mean | S.E. |
| F | 1,03588 | 0,01 | F | 1,02063 | 0,01 |
| G | 1,04812 | 0,02 | G | 1,03943 | 0 |

Example 3 (not according to the invention)

## Reduction of faecal density by perlite granulate

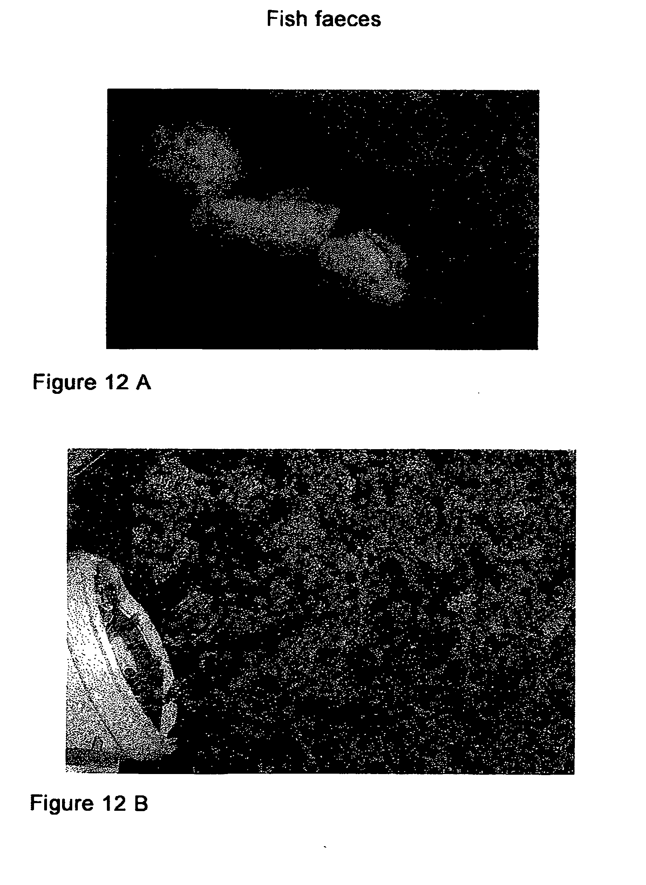

In a further approach, the inventors tried to reduce the density of faeces, such that the faeces may be removed from the aquaculture as solid particles floating close to the water surface. From there the faeces may be removed fast and gently with minimal shear stress, thereby reducing defragmentation and leaching. Surprisingly, the inventors found that this can be achieved by feeding the fish with a diet comprising a density reducing material. In a first experiment, microperls of perlite were admixed with conventional feed using honey as carrier. Two groups of fish were cultured as described above and fed with the perlite comprising feed or with conventional feed as a control, respectively. The fish ingested the feed normally without any signs of rejecting the feed due to the density reducing material contained. During digestion, the density reducing material was incorporated into the fish faeces and defecated without any apparent anomalies. Samples of faeces were collected as described and their density was measured. This experiment revealed that the density of faeces could be reduced by up to 2,8 % by adding perlite microperls to the fishs' diet **(table 12)**. Due to their low density, the faeces comprising the density reducing material floated towards the water surfaces **(figure 12 A),** from where they were removed by conventional means.

**Table 12:** Density of faeces for perlite microperls comprising feed

| amount of perlite / 500g feed [g] | Density of faeces (Intestinal) [g/cm$^3$] | Density of faeces (moistened) [g/cm$^3$] | Reduction of density [g/cm$^3$] |
|---|---|---|---|
| 4 g | 1,0395 | 1,0105 | - 0,029 (73.4%) |
| 5 g | 1,0381 | 1,0171 | - 0,021 (55,1%) |
| 6 g | 1,054 | 1,0472 | - 0,0068 (12,6%) |

## Reducing faecal density by light weight fillers

Preparation of diets

In following experiments ten different diets comprising different density reducing materials were prepared as summarized in **table 13** and fed to trout as described above *ad libitum.* As density reducing materials light weight filler, namely glass micropheres, expanded glass granulate, perlite granulate or cork granulate, were used. At the end of the experiment the density of faeces, the growth of the animals as well as feed utilization and digestion was analyzed.

**Table 13:** Diets for reducing the density of faeces containing 0,5 - 1 % density reducing material

| Diet | 1 | 2 | 3 | 4 | 5 | 6 | 7 | 8 | 9 | 10 |
|---|---|---|---|---|---|---|---|---|---|---|
| Protein | 44 | 44 | 44 | 44 | 44 | 44 | 44 | 44 | 44 | 44 |
| Fat | 26 | 26,7 | 26,2 | 26,7 | 26,6 | 26,7 | 26,2 | 26,7 | 26,7 | 26,7 |
| DM[1] | 94 | 94 | 94 | 94 | 94 | 94 | 94 | 94 | 94 | 94 |
| NV[2] | 23,8 | 23,8 | 23,8 | 23,8 | 23,8 | 23,8 | 23,8 | 23,8 | 23,8 | 23,8 |
| Moisture | -1,46 | -1,19 | -1,34 | -1,19 | -1,25 | -1,19 | -1,34 | -1,19 | -1,19 | -1,19 |
| Fish meal | 34,76 | 34,78 | 34,77 | 34,78 | 34,77 | 34,78 | 34,77 | 34,78 | 34,78 | 34,78 |
| Soy cake | 8 | 8 | 8 | 8 | 8 | 8 | 8 | 8 | 8 | 8 |
| Pea | 75 | 10 | 10 | 10 | 10 | 10 | 10 | 10 | 10 | 10 |
| Wheat gluten | 3 | 8 | 8 | 8 | 8 | 8 | 8 | 8 | 8 | 83 |
| Wheat | 13,37 | 13,37 | 13,37 | 13,37 | 13,37 | 13,37 | 13,37 | 13,37 | 13,37 | 13,37 |
| Guar gum | 0,3 | 0,3 | 0,3 | 0,3 | 0,3 | 0,3 | 0,3 | 0,3 | 0,3 | 0,3 |

(continued)

| Diet | 1 | 2 | 3 | 4 | 5 | 6 | 7 | 8 | 9 | 10 |
|---|---|---|---|---|---|---|---|---|---|---|
| Tapioca starch | 4,7 | 2,78 | 4,03 | 2,78 | 3,2 | 2,78 | 4,03 | 2,78 | 2,78 | 2,78 |
| **Glass microsperes**[A] | 0 | 1 | 0 | 0 | 0 | 0 | 0 | 0 | 0 | 0 |
| **Glass microsperes**[B] | 0 | 0 | **0,5** | 0 | 0 | 0 | 0 | 0 | 0 | 0 |
| **Cork granulate**[C] | 0 | 0 | 0 | **1** | 0 | 0 | 0 | 0 | 0 | 0 |
| **Cork granulate**[D] | 0 | 0 | 0 | 0 | **0,8** | 1 | 0 | 0 | 0 | 0 |
| **Perlite granulate**[E] | 0 | 0 | 0 | 0 | 0 | 0 | **0,5** | 1 | 0 | 0 |
| **Glass granulate**[F] | 0 | 0 | 0 | 0 | 0 | 0 | 0 | 0 | 1 | 0 |
| **Glass granulate**[G] | 0 | 0 | 0 | 0 | 0 | 0 | 0 | 0 | 0 | 1 |
| Fish oil | 21,69 | 22,41 | 22,02 | 22,41 | 22,25 | 22,41 | 22,02 | 22,41 | 22,41 | 22,41 |
| MCaP[3] | 0,225 | 0,149 | 0,15 | 0,149 | 0,149 | 0,149 | 0,15 | 0,149 | 0,149 | 0,149 |
| Methionine | 0,027 | 0,027 | 0,027 | 0,027 | 0,027 | 0,027 | 0,027 | 0,027 | 0,027 | 0,027 |
| Vit. C 35% STAY[4] | 0,025 | 0,025 | 0,025 | 0,025 | 0,025 | 0,025 | 0,025 | 0,025 | 0,025 | 0,025 |
| Vit. E POWER 50%[4] | 0,002 | 0,002 | 0,002 | 0,002 | 0,002 | 0,002 | 0,002 | 0,002 | 0,002 | 0,002 |
| Premix Dk3[5] | 0,3 | 0,3 | 0,3 | 0,3 | 0,3 | 0,3 | 0,3 | 0,3 | 0,3 | 0,3 |
| Barox BECP Dry[5] | 0,025 | 0,025 | 0,025 | 0,025 | 0,025 | 0,025 | 0,025 | 0,025 | 0,025 | 0,025 |
| Yttrium | 0,03 | 0,03 | 0,03 | 0,03 | 0,03 | 0,03 | 0,03 | 0,03 | 0,03 | 0,03 |

[1]dry matter, [2]nutritive value, [3]monocalcium phosphate, [4]containing vitamine mixtures, [5]containing vitamins, minerals and antioxidants; [A]Glass beads S38Hs (3M Deutschland GmbH, Germany), [B]Glass beads K15 (3M Deutschland GmbH, Germany), [C]Cork 0.1-0.3 (Amorim Cork Composites, SA, Spain), Cork 0.5-1 (Amorim Cork Composites, SA, Spain), [E]Perlite Micropearls mp500FH (Damolin Hamburg GmbH, Germany), [F]Poraver® 0.25-0.5 (Dennert Poraver GmbH, Germany), [G]Poraver® 0.5-1 (Dennert Poraver GmbH, Germany);

Density of faeces

Faeces were sampled and analyzed as described above. By feeding fish with diets comprising a density reducing material, the faecal density was considerably reduced, as is evident from the results shown in **table 14.** Faecal density was close to 1 or even below 1, such that the faecal particles were floating.

Table 14: Density of intestinal faeces and faeces moistened in system water

| Intestinal faeces | | | Faeces moistened in system water | | |
|---|---|---|---|---|---|
| Diet | mean | S.E. | Diet | mean | S.E. |
| **1** | 1,03518 | 0,02 | **1** | 1,01468 | 0 |
| **2** | 1,02613 | 0,01 | **2** | 0,99785 | 0 |
| **3** | 1,01845 | 0 | **3** | 1,01623 | 0,01 |
| **4** | 1,02308 | 0 | **4** | 1,00403 | 0,01 |
| **5** | 1,04283 | 0 | **5** | 0,99400 | 0,01 |
| **6** | 1,01441 | 0,01 | **6** | 0,99058 | 0,0 |
| **7** | 1,01218 | 0,01 | **7** | 0,99478 | 0,01 |
| **8** | 0,99735 | 0,04 | **8** | 1,01371 | 0,01 |
| **9** | 1,02950 | 0,02 | **9** | 1,01698 | 0,01 |
| **10** | 1,02253 | 0,03 | **10** | 1,00431 | 0 |

Example 4

Diets comprising concentrations of density reducing materials of 1 to 2 % were prepared and tested to evaluate whether higher contents of density reducing materials strengthen the buoyant effect of the faeces without altering the fishs' health and growth rate.

Preparation of diets

Ten different diets comprising a density reducing material at concentrations of 1 - 2 % were prepared as summarized in **table 15.** In addition to the density reducing material, diets 5 and 7 also comprised fermentation enhancing additives as fructo-oligosaccharide and vermiculite. Diet 1, which does not comprise any density reducing material or additives, was used as control.

Table 15: Diets for reducing the density of faeces containing 1 - 2 % density reducing material (4,5 mm pellets)

| Diet | 1 | 2 | 3 | 4 | 5 | 6 | 7 | 8 | 9 | 10 |
|---|---|---|---|---|---|---|---|---|---|---|
| Protein, % | 44 | 44 | 44 | 44 | 44 | 44 | 44 | 44 | 44 | 44 |
| Fat, % | 26 | 26 | 26 | 26 | 26 | 26 | 26 | 26 | 26 | 26 |
| DM[1], % | 94 | 94 | 94 | 94 | 94 | 94 | 94 | 94 | 94 | 94 |
| DW[2] | -1.32 | -1.00 | -1.08 | -1.00 | -0.98 | -1.00 | -0.98 | -1.00 | -1.00 | -1.00 |
| Fish meal | 32.94 | 33.33 | 33.23 | 33.33 | 33.36 | 33.33 | 33.36 | 33.33 | 33.33 | 33.33 |
| Soy cake | 8.00 | 8.00 | 8.00 | 8.00 | 8.00 | 8.00 | 8.00 | 8.00 | 8.00 | 8.00 |
| Pea protein | 10.00 | 10.00 | 10.00 | 10.00 | 10.00 | 10.00 | 10.00 | 10.00 | 10.00 | 10.00 |
| Wheat gluten | 8.00 | 8.00 | 8.00 | 8.00 | 8.00 | 8.00 | 8.00 | 8.00 | 8.00 | 8.00 |
| Wheat | 19.52 | 16.76 | 17.45 | 16.76 | 16.55 | 16.76 | 16.55 | 16.76 | 16.76 | 16.76 |
| Tapioca starch | 0.00 | 0.00 | 0.00 | 0.00 | 0.00 | 0.00 | 0.00 | 0.00 | 0.00 | 0.00 |
| **Glass microsperes[A]** | 0 | **2** | 0 | 0 | 0 | 0 | **1** | 0 | 0 | 0 |
| **Glass microsperes[B]** | 0 | 0 | **1.5** | 0 | 0 | 0 | 0 | 0 | 0 | 0 |
| **Cork granulate[C]** | 0 | 0 | 0 | **2** | 0 | 0 | 0 | 0 | 0 | 0 |
| **Cork granulate[D]** | 0 | 0 | 0 | 0 | **1** | **2** | 0 | 0 | 0 | 0 |
| **Perlite granulate[E]** | 0 | 0 | 0 | 0 | 0 | 0 | 0 | 2 | 0 | 0 |
| **Glass granulate[F]** | 0 | 0 | 0 | 0 | 0 | 0 | 0 | 0 | **2** | 0 |
| **Glass granulate[G]** | 0 | 0 | 0 | 0 | 0 | 0 | 0 | 0 | 0 | **2** |
| **Fructo mix[H]** | 0 | 0 | 0 | 0 | 1 | 0 | 1 | 0 | 0 | 0 |
| **Vermicult** | 0 | 0 | 0 | 0 | **0.15** | 0 | **0.15** | 0 | 0 | 0 |
| **Guar gum** | 0.3 | 0.3 | 0.3 | 0.3 | 0.3 | 0.3 | 0.3 | 0.3 | 0.3 | 0.3 |
| Fish oil | 21.93 | 21.98 | 21.97 | 21.98 | 22.41 | 21.98 | 22.41 | 21.98 | 21.98 | 21.98 |
| MCaP[3] | 0.176 | 0.181 | 0.180 | 0.181 | 0.149 | 0.181 | 0.149 | 0.181 | 0.181 | 0.181 |
| Methionine | 0.074 | 0.071 | 0.072 | 0.071 | 0.027 | 0.071 | 0.027 | 0.071 | 0.071 | 0.071 |
| VIT C 35% STAY[4] | 0.025 | 0.025 | 0.025 | 0.025 | 0.025 | 0.025 | 0.025 | 0.025 | 0.025 | 0.025 |
| VIT E POWDER 50%[4] | 0.002 | 0.002 | 0.002 | 0.002 | 0.002 | 0.002 | 0.002 | 0.002 | 0.002 | 0.002 |
| Premix Dk 3[5] | 0.300 | 0.300 | 0.300 | 0.300 | 0.300 | 0.300 | 0.300 | 0.300 | 0.300 | 0.300 |
| BAROX BECP DRY[5] | 0.025 | 0.025 | 0.025 | 0.025 | 0.025 | 0.025 | 0.025 | 0.025 | 0.025 | 0.025 |
| Yttrium | 0.03 | 0.03 | 0.03 | 0.03 | 0.03 | 0.03 | 0.03 | 0.03 | 0.03 | 0.03 |
| Total | 100.0 | 100.0 | 100.0 | 100.0 | 100.3 | 100.0 | 100.3 | 100.0 | 100.0 | 100.0 |
| Phosphor | 0.9 | 0.9 | 0.9 | 0.9 | 0.9 | 0.9 | 0.9 | 0.9 | 0.9 | 0.9 |

[1]Dry mass, [2]DRYING/WETTING Brande, [3]Monocalcium phosphate, [4]containing vitamine mixtures, [5]containing vitamins, minerals and antioxidants; [A]Glass beads S38Hs (3M Deutschland GmbH, Germany), Glass beads K15 (3M Deutschland GmbH, Germany), [C]Cork 0.1-0.3 (Amorim Cork Composites, SA, Spain), [D]Cork 0.5-1 (Amorim Cork Composites, SA, Spain), [E]Perlite Micropearls mp500FH (Damolin Hamburg GmbH, Germany), [F]Poraver® 0.25-0.5 (Dennert Poraver GmbH, Germany), [G]Poraver® 0.5-1 (Dennert Poraver GmbH, Germany), [H]Phytobiotics Futterzusatzstoffe GmbH, Germany;

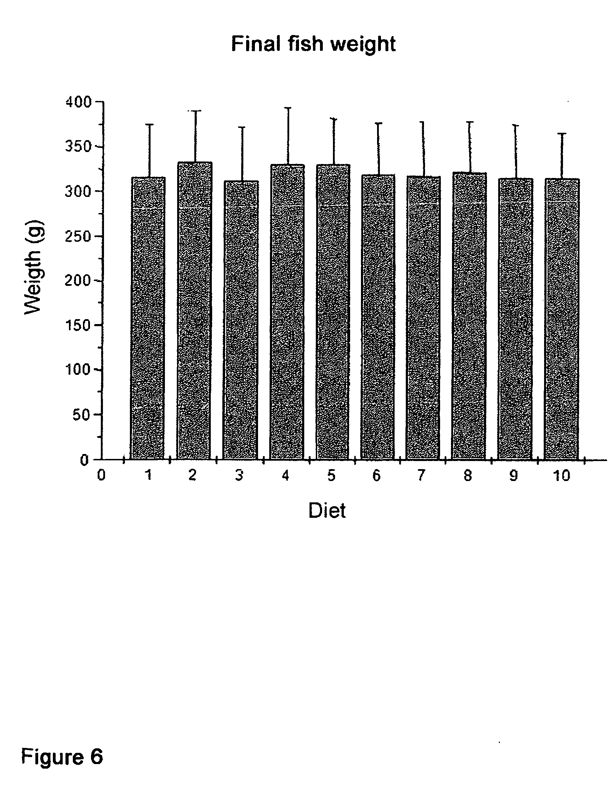

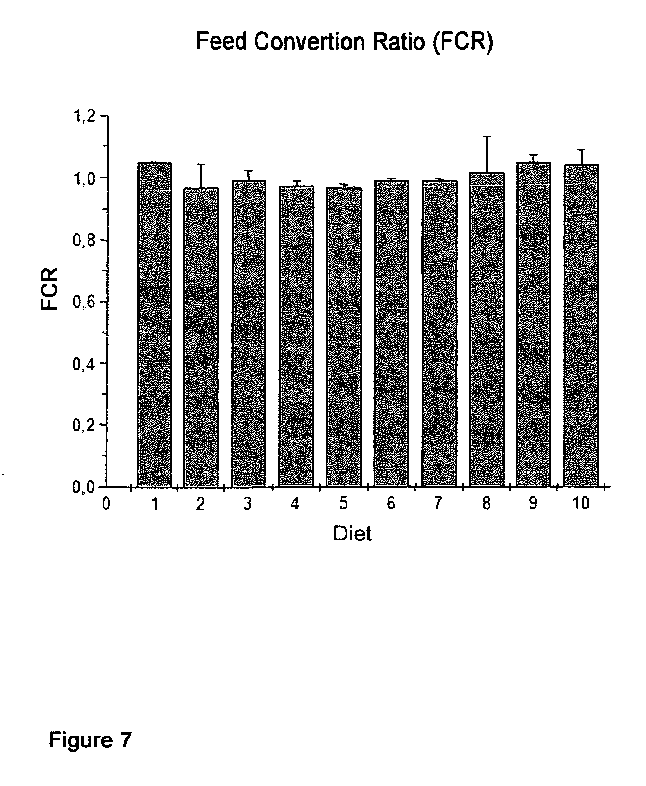

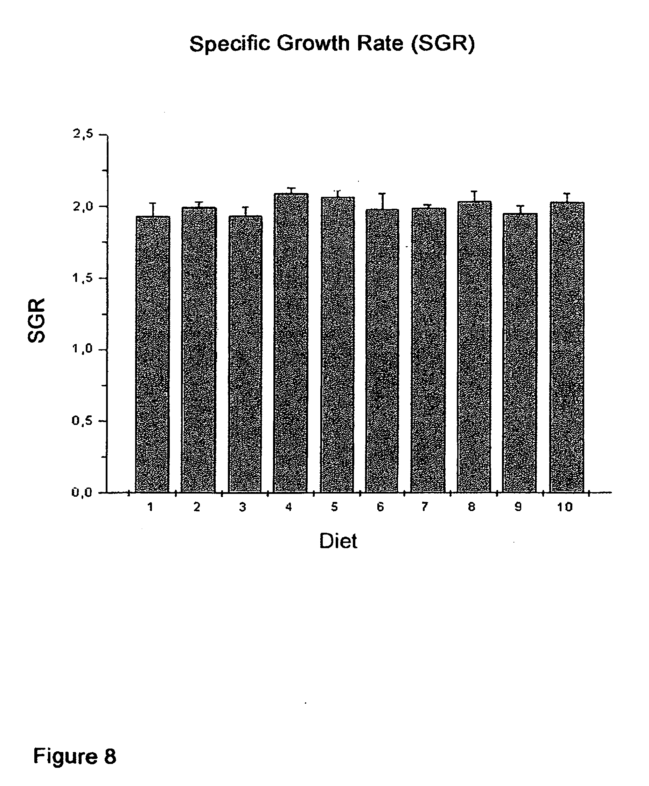

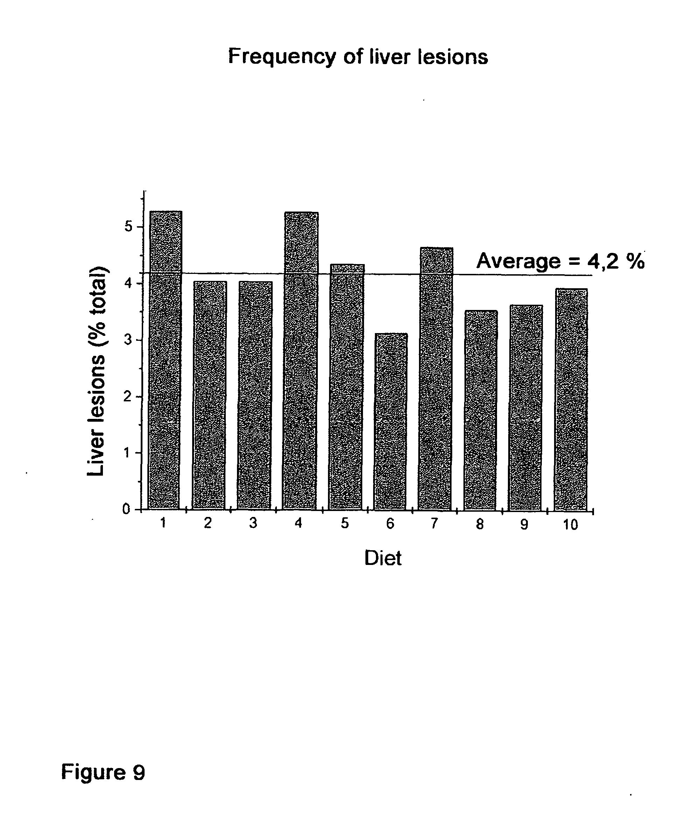

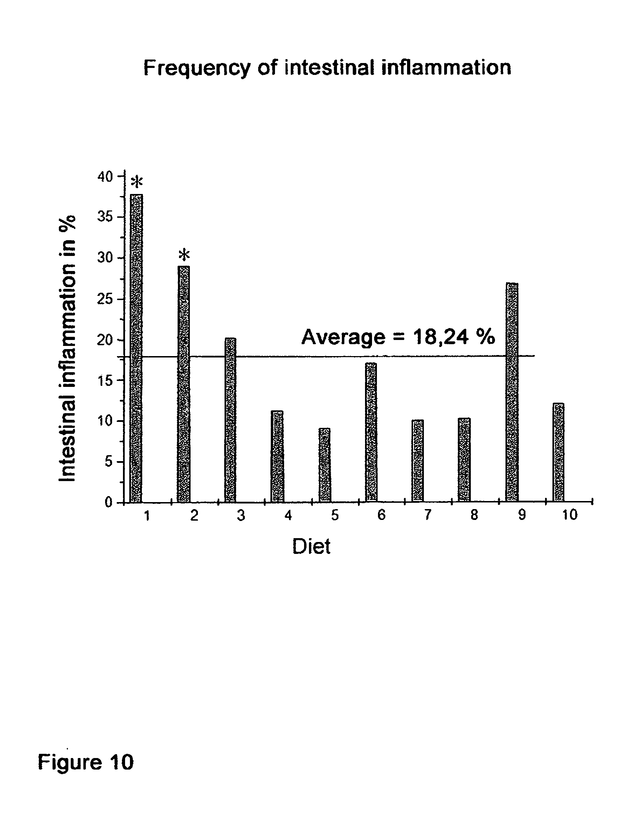

At the end of the experiment faeces were sampled and the animals analyzed regarding growth, health and feed utilization. Fish of all groups showed similar final body weights, Feed Conversion Ratios and Specific Growth Rates **(figures 6, 7 and 8).** The animals' health was determined by analyzing liver lesions and inflammation of the intestine **(figures 9 and 10).** No diet treatment induced significantly increased levels compared to microsphere-free control. Interestingly, all diets tested caused less intestine inflammations compared to the control diet. Thus, none of the tested density reducing materials had adverse effects on the animals' health or their growth performance.

Density of faeces

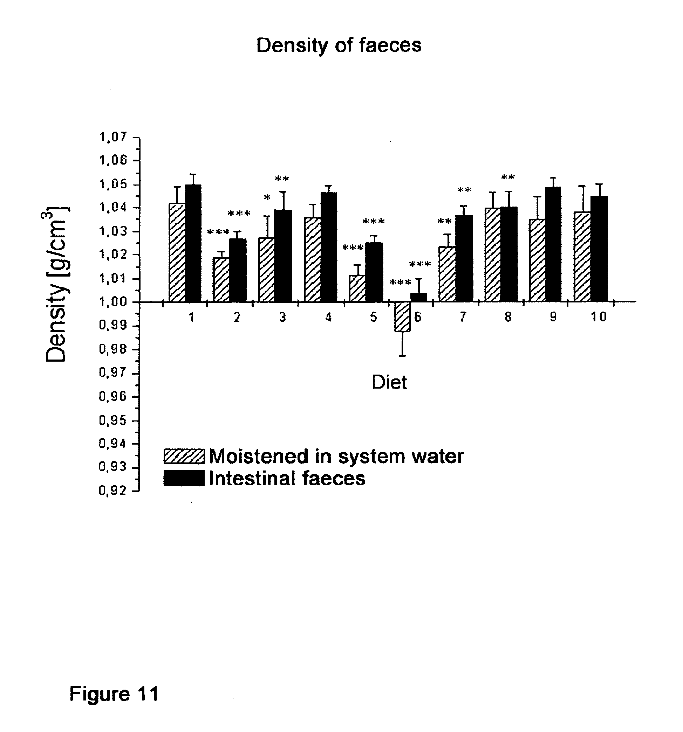

Faeces were sampled and their density was measured immediately (intestinal faeces) or upon moistening the faeces in water for one hour. Most significantly, the density of faeces was reduced upon feeding the fish with feeds comprising expanded glass granulate (diets 2, 3 and 7), cork granulate (diets 5 and 6) and glass micropheres (diet 8) as summarized in **table 16** and **figure 11**. As is apparent from the data shown in **table 16,** the faeces density closely approximated, and for diet 6 even dropped below the density of water. Consistently, the faeces were rising towards the water surface **(figure 12 A)** from where they were easy to remove.

**Table 16:** Density of faeces moistened in system water and intestinal faeces

| | Density ($g/cm^3$) $\pm$ S.E. | |
| --- | --- | --- |
| **Diet** | **Moistened faeces in water** | **Intestinal faeces** |
| **1** | 1,04172 $\pm$ 0,00322 | 1,04988 $\pm$ 0,00189 |
| **2** | 1.01895 $\pm$ 0.00102 | 1,02687 $\pm$ 0,00120 |
| **3** | 1,02738 $\pm$ 0,00380 | 1,03940 $\pm$ 0,00295 |
| **4** | 1,03592 $\pm$ 0,00217 | 1,04652 $\pm$ 0,00117 |
| **5** | 1,01123 $\pm$ 0,00178 | 1,02492 $\pm$ 0,00125 |
| **6** | 0,98782 $\pm$ 0,00422 | 1,00380 $\pm$ 0,00254 |
| **7** | 1,02323 $\pm$ 10,00210 | 1,03653 $\pm$ 0,00173 |
| **8** | 1,03988 $\pm$ 0,00264 | 1,04022 $\pm$ 0,00266 |
| **9** | 1,03477 $\pm$ 0,00404 | 1,04843 $\pm$ 0,00162 |
| **10** | 1,03775 $\pm$ 0,00454 | 1,04478 $\pm$ 0,00214 |

Taken together, these results demonstrate that the addition of density reducing materials to fish feed does not impair fish growth or health. Therefore, density reducing materials are suitable to be incorporated into fish feed.

Example 5

To evaluate the application of a density reducing material on a large scale, the application of fish feed comprising a density reducing material, namely cork granulate, was tested in a commercial partly recirculating fish farm. The test diet was provided by admixing commercially available fish feed (Efico enviro 921, BioMar, Denmark; 3 mm (fed to small fish; size range 30 g - 200 g) or 4,5 mm pellets (fed to growout fish and trout; size range: 100 g - 1200 g) with cork granulate (2,2 %) and guar gum (0,3 %). For control, a second group of fish were cultured and fed with the control diet, namely Efico enviro 921 free of cork but with guar gum.

Both diets were tested on rainbow trout (Störk strain) cultured in a semi-recirculating aquaculture system. For control, fish of a total weight of all fish of 11.213,9 kg were fed with the control diet (i.e. not containing cork granulate but guar gum) with 110 kg feed/day *ad libitum* for 18 days. At the end, fish reached a final total weight of all fish of 14.075 kg. The fish of the test group were fed with 135 kg/day of test diet for 23 days, comprising 2,2 % cork granulate and 0,3 % guar gum. Starting with a total weight of 15.605 kg a final total weight of all fish of 17.771 kg was reached, though some fish were sold during the trial.

Feed Conversion Ratios (FCR) were similar for fish fed with control diet (FCR: 0,99) and test diet (FCR: 0,98). In addition, histological analyses revealed no significant histological alterations upon feeding with the test feed. In particular, all fish fed with the test diet were in good general health conditions, with only low frequencies of single liver cell necroses. Most importantly, extensive liver or intestine damages were not observed. In summary this demonstrates that the addition of cork granulate did not impair the animals' health.

The density of faeces was analyzed as described above one week after the beginning and at the end of the experiment. This revealed a significant reduction of the faecal density upon feeding the test diet comprising cork granulate **(table 17).** Indeed, the faeces' density dropped below zero resulting in the faeces floating on the water surface **(figure 12 B).**

**Table 17:** Density of faeces

| Density (g/cm$^3$) $\pm$ S.E. | | |
|---|---|---|
| **Portion sized fish** | | |
| **Diet** | **Faeces moistened in water** | **Intestinal faeces** |
| **Control** | 1,03196 $\pm$ 0,00200 | 1,04886 $\pm$ 0,001381 |
| **Test** | 0,99458 $\pm$ 0,00194 | 1,00257 $\pm$ 0,002133 |
| **Small fish** | | |
| **Diet** | **Faeces moistened in water** | **Intestinal faeces** |
| **Control** | 1,0233 $\pm$ 0,00209 | 1,0277 $\pm$ 0,00035 |
| **Test** | 0,9949 $\pm$ 0,00269 | 1,0012 $\pm$ 0,0044 |
| * Density of test faeces is significantly lower than of control faeces (p<0,0001) | | |

Since the faeces with the reduced density were mostly floating at the water surface an increased amount of faeces could be removed from the aquaculture. To elicit the effect of the increased removal on water quality, the amount of ammonium and of nitrite taken from the effluent using a biofilter was determined. Since the fish fed with the control diet ingested less feed (110 kg/day) compared to fish fed with the test diet (135 kg/day), the removal efficiency of the biofilter was expected to be impaired due to increased load. Surprisingly however, the amount of ammonium and of nitrite removed by the biofilter was significantly higher when the fish were fed with the test diet **(table 18).** This strongly suggests that due to the increased removal of fish faeces the amount of soluble solids in the effluent is reduced to a level allowing for a more efficient biofiltration. This is further supported by the observation that the value for nitrite removal from the control aquaculture is in the negative (-6,04). An organic overloading of the biofilter with faecal solids while feeding control diet probably resulted in a domination of heterotrophic micro-organisms at the sacrifice of obligate aerobe nitrifying bacteria. Nitrobacter, the group of bacteria, which oxidize nitrite to nitrate, are generally the first to be displaced when space limitation and/or oxygen depletion takes place. In the presence of sufficient BOD$_5$, organic compounds will be oxidized preferentially as the heterotrophic micro-organisms oust the autotrophic bacteria In contrast, feeding fish with the test diet did not only abolish this effect but enabled an efficient removal (3,65) of nitrite from the effluent.

**Table 18:** Removal of ammonium and of nitrite by biofiltration

| Removal of ammonium | | |
|---|---|---|
| **Diet** | **Mean (%)** | **$\pm$ S.E.** |
| **Control** | 18,938352 | 0,75412848 |
| **Test** | 34,65841 | 0,76398679 |
| **Removal of nitrite** | | |
| **Diet** | **Mean (%)** | **$\pm$ S.E.** |
| **Control** | -6,044193 | 1,0546355 |
| **Test** | 3,652132 | 1,083535 |
| * Removal was significantly increased compared to control (p<0,0001) | | |

As a result from the increased removal of faeces from the aquaculture and the resulting improved biofiltration, the concentrations of ammonium and of nitrite in the effluent were reduced by about 50 % upon feeding fish with a cork granulate comprising feed. (**table 19).**

**Table 19:** Level of ammonium and of nitrite in effluents

| Level of ammonium | | |
|---|---|---|
| **Diet** | **Mean (NH$_4$N μg/l)** | **$\pm$ S.E.** |
| **Control** | 950,99238 | 27,226142 |
| **Test** | 474,60434 | 27,582054 |

(continued)

| Diet | Level of nitrite Mean (NO$_2$-N $\mu$g/l) | ± S.E. |
|---|---|---|
| Control | 0,29046 | 0,00836457 |
| Test | 0,18660611 | 0,00859378 |
| * Level was significantly reduced compared to control (p<0,0001) | | |

These data show that feeds comprising a density reducing material as e.g cork granulate not only allows an efficient removal of faeces from the water of aquacultural systems but results in a essential reduction of ammonium and of nitrite. As a consequence, fish producing capacity can be increased without raising waste load. In the present case, at least a doubling of actual stock or applied feed would be feasible.

References

Brinker, A., Schröder, H.G., Rösch, R., 2005. A high-resolution technique to size suspended solids in flow-through fish farms. Aquacultural Engineering 32, 325-341.

Brinker, A., Hamers, R., 2007. Evidence for negative impact of plerocercoid infection of Triaenophorus nodulosus on Perca fluviatilis L. stock in Upper Lake Constance, a water body undergoing rapid reoligotrophication. Journal of Fish Biology 71, 129-147.

Brinker, A., 2009. Improving the mechanical characteristics of faecal waste in rainbow trout: the influence of fish size and treatment with a non-starch polysaccharide (guar gum). Aquaculture Nutrition 15, 229-240.

National Research Council (NRC). Committee on Animal, N., 1993. Nutrient requirements of fish. National Academies Press.

**Claims**

1.  A feed for an aquacultural animal comprising a density reducing material and an indigestible polysaccharide, wherein the density reducing material is cork granulate and is incorporated into the animal's faeces during digestion, such that the faeces rise towards a water surface, wherein the feed comprises the density reducing material In a concentration of about 0,25 to about 5 %.

2.  The feed according to claim 1, wherein the density reducing material is indigestible.

3.  The feed according to claim 1 or 2, wherein the density reducing material has a density of less than about 1000 kg/m$^3$, preferably a density of less than about 800 kg/m$^3$, more preferred a density of less than about 600 kg/m$^3$, most preferred a density of less than about 250 kg/m$^3$.

4.  The feed according to any of claims 1 to 3, wherein the density reducing material has a granule size of about 20 to about 1000 $\mu$m.

5.  The feed according to any of claims 1 to 4, wherein the feed comprises the density reducing material in a concentration of about 0,5 to about 3 %, preferably about 0,5 to about 2 %.

6.  The feed according to any of claims 1 to 5, wherein the indigestible polysaccharide is guar gum.

7.  The feed according to any of claims 1 to 6, wherein the feed further comprises a fermentation enhancing additive.

8.  The feed according to claim 7, wherein the fermentation enhancing additive is selected from the group consisting of a fructo-oligosaccharide, a silicate mineral, inulin from industrial chicory, a mannan-oligosaccharide, raw potato starch, acacia gum and combinations thereof.

9. The feed according to any of claims 1 to 8, wherein the aquacultural animal Is a fish, a crustacea or a mollusc.

10. The feed according to claim 9, wherein the fish is selected from the group consisting of salmonidae, preferably, trout, grayling, salmon, shar, big blgeye tuna, carp, tilapia and cod.

11. Use of cork granulate as an additive for a feed for an aquacultural animal, wherein the feed further comprises an indigestible polysaccharide and comprises the cork granulate in a concentration of about 0,25 to about 5 %.

12. Use of cork granulate for manufacturing a feed for an aquacultural animal, wherein the feed further comprises an indigestible polysaccharide and comprises the cork granulate in a concentration of about 0,25 to about 5 %.


**Patentansprüche**

1. Futter für ein Aquakulturtier umfassend ein dichtereduzierendes Material und ein unverdauliches Polysaccharid, wobei das dichtereduzierende Material Korkgranulat ist und während der Verdauung in den Kot des Tieres eingebaut wird, so dass der Kot zu einer Wasseroberfläche aufsteigt, wobei das Futter das dichtereduzierende Material in einer Konzentration von etwa 0,25 bis etwa 5% umfasst.

2. Futter gemäß Anspruch 1, wobei das dichtereduzierende Material unverdaulich ist.

3. Futter gemäß Anspruch 1 oder 2, wobei das dichtereduzierende Material eine Dichte von weniger als etwa 1000 kg/m$^3$, vorzugsweise eine Dichte von weniger als etwa 800 kg/m$^3$, weiter bevorzugt eine Dichte von weniger als etwa 600 kg/m$^3$, am meisten bevorzugt eine Dichte von weniger als etwa 250 kg/m$^3$ hat.

4. Futter gemäß einem der Ansprüche 1 bis 3, wobei das dichtereduzierende Material eine Granulatgröße von etwa 20 bis etwa 1000 $\mu$m hat.

5. Futter gemäß einem der Ansprüche 1 bis 4, wobei das Futter das dichtereduzierende Material in einer Konzentration von etwa 0,5 bis etwa 3%, vorzugsweise etwa 0,5 bis etwa 2% umfasst.

6. Futter gemäß einem der Ansprüche 1 bis 5, wobei das unverdauliche Polysaccharid Guarkernmehl ist.

7. Futter gemäß einem der Ansprüche 1 bis 6, wobei das Futter weiter einen fermentationsverstärkenden Zusatzstoff umfasst.

8. Futter gemäß Anspruch 7, wobei der fermentationsverstärkende Zusatzstoff aus der Gruppe bestehend aus einem Fructo-Oligosaccharid, einem Silikatmineral, Inulin aus industriellem Chicoree, einem Mannan-Oligosaccharid, roher Kartoffelstärke, Gummi arabicum und Kombinationen davon ausgewählt ist.

9. Futter gemäß einem der Ansprüche 1 bis 8, wobei das Aquakulturtier ein Fisch, ein Krustentier oder ein Weichtier ist.

10. Futter gemäß Anspruch 9, wobei der Fisch aus der Gruppe bestehend aus Salmoniden, vorzugsweise Forelle, Äsche, Lachs, Saibling, großer Großaugenthun, Karpfen, Buntbarsch und Kabeljau ausgewählt ist.

11. Verwendung von Korkgranulat als ein Zusatzstoff für ein Futter für ein Aquakulturtier, wobei das Futter weiter ein unverdauliches Polysaccharid umfasst und das Korkgranulat in einer Konzentration von etwa 0,25 bis etwa 5% umfasst.

12. Verwendung von Korkgranulat zum Herstellen eines Futters für ein Aquakulturtier, wobei das Futter weiter ein unverdauliches Polysaccharid umfasst und das Korkgranulat in einer Konzentration von etwa 0,25 bis etwa 5% umfasst.

**EP 2 570 034 B1**

**Revendications**

1. Aliment pour un animal d'aquiculture comprenant un matériau réducteur de densité et un polysaccharide indigestible, dans lequel le matériau réducteur de densité est un granulé de liège et est incorporé dans les matières fécales de l'animal pendant la digestion, de telle sorte que les matières fécales remontent à la surface de l'eau, dans lequel l'aliment comprend le matériau réducteur de densité dans une concentration d'environ 0,25 à environ 5 %.

2. Aliment selon la revendication 1, dans lequel le matériau réducteur de densité est indigestible.

3. Aliment selon la revendication 1 ou 2, dans lequel le matériau réducteur de densité a une densité inférieure à environ 1000 kg/m$^3$, de préférence une densité inférieure à environ 800 kg/m$^3$, plus préférablement une densité inférieure à environ 600 kg/m$^3$, le plus préférablement une densité inférieure à environ 250 kg/m$^3$.

4. Aliment selon l'une quelconque des revendications 1 à 3, dans lequel le matériau réducteur de densité a une taille de granulés d'environ 20 à environ 1000 $\mu$m.

5. Aliment selon l'une quelconque des revendications 1 à 4, dans lequel l'aliment comprend le matériau réducteur de densité dans une concentration d'environ 0,5 à environ 3 %, de préférence d'environ 0,5 à environ 2 %.

6. Aliment selon l'une quelconque des revendications 1 à 5, dans lequel le polysaccharide indigestible est la gomme de guar.

7. Aliment selon l'une quelconque des revendications 1 à 6, dans lequel l'aliment comprend en outre un additif d'amélioration de la fermentation.

8. Aliment selon la revendication 7, dans lequel l'additif d'amélioration de la fermentation est sélectionné dans le groupe constitué par un fructo-oligosaccharide, un silicate minéral, l'inuline provenant de la chicorée industrielle, un oligosaccharide-mannane, l'amidon de pomme de terre crue, la gomme d'acacia et des combinaisons de ceux-ci.

9. Aliment selon l'une quelconque des revendications 1 à 8, dans lequel l'animal d'aquiculture est un poisson, un crustacé ou un mollusque.

10. Aliment selon la revendication 9, dans lequel le poisson est sélectionné dans le groupe constitué par les salmonidés, de préférence la truite, l'ombre commun, le saumon, l'omble, le gros thon obèse, la carpe, le tilapia et le cabillaud.

11. Utilisation d'un granulé de liège en tant qu'additif pour un aliment pour un animal d'aquiculture, dans laquelle l'aliment comprend en outre un polysaccharide indigestible et comprend le granulé de liège dans une concentration d'environ 0,25 à environ 5 %.

12. Utilisation d'un granulé de liège pour produire un aliment pour un animal d'aquiculture, dans laquelle l'aliment comprend en outre un polysaccharide indigestible et comprend le granulé de liège dans une concentration d'environ 0,25 à environ 5 %.

# Final fish weight

**Figure 1**

Figure 2

## Density of faeces

Figure 3

## Removal efficiency of faeces

Figure 4

Figure 5 A

Figure 5 B

## Final fish weight

Figure 6

## Feed Convertion Ratio (FCR)

Figure 7

## Specific Growth Rate (SGR)

Figure 8

## Frequency of liver lesions

Figure 9

# Frequency of intestinal inflammation

**Figure 10**

Figure 11

## Fish faeces

Figure 12 A

Figure 12 B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• FR 2584270

### Non-patent literature cited in the description

• **BRINKER, A. ; SCHRÖDER, H.G. ; RÖSCH, R.** A high-resolution technique to size suspended solids in flow-through fish farms. *Aquacultural Engineering,* 2005, vol. 32, 325-341
• **BRINKER, A. ; HAMERS, R.** Evidence for negative impact of plerocercoid infection of Triaenophorus nodulosus on Perca fluviatilis L. stock in Upper Lake Constance, a water body undergoing rapid reoligotrophication. *Journal of Fish Biology,* 2007, vol. 71, 129-147

• **BRINKER, A.** Improving the mechanical characteristics of faecal waste in rainbow trout: the influence of fish size and treatment with a non-starch polysaccharide (guar gum). *Aquaculture Nutrition,* 2009, vol. 15, 229-240
• Nutrient requirements of fish. National Academies Press, 1993